# EUROPÄISCHE PATENTSCHRIFT

(11) **EP 3 492 804 B1**
(45) Veröffentlichungstag und Bekanntmachung des Hinweises auf die Patenterteilung: **09.09.2026**
(21) Anmeldenummer: 17205071.8
(22) Anmeldetag: 04.12.2017
(51) Int. Cl.: F21S 41/153, F21S 41/143, F21S 41/19, F21S 41/29, F21S 41/663

(54) **KRAFTFAHRZEUGSCHEINWERFER UND VERFAHREN**
MOTOR VEHICLE HEADLIGHT AND PROCESS
PHARES DE VÉHICULE AUTOMOBILE ET PROCÉDÉ

(43) Veröffentlichungstag der Anmeldung: 05.06.2019
(73) Patentinhaber: ZKW Group GmbH, 3250 Wieselburg (AT)
(72) Erfinder: Hölzl, Andreas, 3250 Wieselburg (AT); David, Sascha, 3211 Loich (AT); Frühwirth, Matthias, 3370 Ybbs (AT); Gürtl, Josef, 3233 Kilb (AT)
(74) Vertreter: Patentanwaltskanzlei Matschnig & Forsthuber OG

(56) Entgegenhaltungen:
- EP-A1- 2 674 325
- EP-A2- 2 827 049
- WO-A1-2016/203945
- DE-T5- 112016 002 700
- FR-A1- 3 008 475

## Beschreibung

Die Erfindung betrifft einen Kraftfahrzeugscheinwerfer mit einem Lichtmodul mit einer Vielzahl von Lichtquellen, welche jeweils eine lichtemittierende Fläche aufweisen und auf einer gemeinsamen Leiterplatte angeordnet sind, und einer Vielzahl von Primäroptiken, welche jeweils eine Lichteinkoppelfläche und jeweils eine Lichtauskoppelfläche aufweisen und von einem gemeinsamen Halter in Position gehalten sind, wobei jede Lichtquelle dazu eingerichtet ist, Licht von der jeweiligen lichtemittierenden Fläche zu emittierten und in eine jeweilig zugeordnete Lichteinkoppelfläche einzukoppeln.

Die Erfindung betrifft außerdem ein Verfahren zur Justierung einer Vielzahl von Lichtquellen und einer Vielzahl von Primäroptiken eines Kraftfahrzeugscheinwerfers zueinander.

Bei der Entwicklung der gegenwärtigen Scheinwerfersysteme steht immer mehr der Wunsch im Vordergrund, ein möglichst hochaufgelöstes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell entspricht das Lichtbild im verwendeten Sinn einer Projektion auf eine vertikale Fläche entsprechend der einschlägigen Normen, die sich auf die KFZ-Beleuchtungstechnik beziehen.

Um diesem genannten Bedürfnis zu entsprechen, wurden unter anderem Scheinwerfer entwickelt, die aus einer Mehrzahl von Einzelstrahlern eine Leuchtmatrix bilden. Derartige Leuchteinrichtungen, die auch als "Pixellicht" bezeichnet werden, sind im Fahrzeugbau gebräuchlich und dienen beispielsweise der Abbildung von blendfreiem Fernlicht, wobei das Licht in der Regel von einer Mehrzahl von Lichtquellen ausgestrahlt wird und von einer entsprechenden Mehrzahl von nebeneinander angeordneten Lichtführungen (Vorsatzoptik/ Primäroptik) in Abstrahlrichtung gebündelt wird. Die Lichtführungen weisen einen relativ geringen, trichterförmigen Querschnitt auf und senden das Licht der ihnen zugeordneten einzelnen Lichtquellen daher sehr konzentriert in die Abstrahlrichtung aus. Die Lichtführungen leiten das Licht von den Lichtquellen zu einer möglichst gut angenäherten Position auf einer räumlich gekrümmten Ebene, der sogenannten Petzval-Ebene der vorgelagerten Abbildungsoptik, weiter.

Pixelscheinwerfer sind hinsichtlich der Lichtverteilung sehr flexibel, da für jedes Pixel, d.h. für jede Lichtführung die Beleuchtungsstärke, individuell geregelt werden kann und beliebige Lichtverteilungen realisiert werden können, wie beispielsweise eine Abblendlicht-Lichtverteilung, eine Abbiegelicht-Lichtverteilung, eine Stadtlicht-Lichtverteilung, eine Autobahnlicht-Lichtverteilung, eine Kurvenlicht-Lichtverteilung oder eine Fernlicht-Lichtverteilung.

Die AT 513 738 B1 beschreibt Scheinwerfersysteme der Anmelderin, welche das Licht einer großen Anzahl von Leuchtdioden (LEDs) über Projektionssysteme mit Einzellinsen als Lichtbild auf die Fahrbahn projizieren, wobei die Helligkeit der einzelnen LEDs, die von einer zentralen Recheneinheit ausgehend gesteuert werden, individuell eingestellt bzw. geändert werden kann.

Zusätzlich zur variablen Beleuchtungsstärke kann die Geometrie der Lichtführungselemente genutzt werden, um Lichtbilder zu beeinflussen.

Die DE 10 412 213 845 A1 offenbart eine Beleuchtungsvorrichtung, die bei Kraftfahrzeugscheinwerfern mit einer Primäroptik deren Lichtführungselemente derart gestaltet, dass die Intensität in Längsrichtung der Austrittsfläche variiert wird. Dabei wird von jeweils gleichartigen Lichtführungselementen innerhalb einer Primäroptik ausgegangen.

In EP 2 674 325 A1 ist ein Nah-IR-Beleuchtungseinrichtung beschrieben, der fünf IR-LEDs mit je einer Projektionslinsen sowie einer äußeren Linse enthält, wobei eine Einstellung der optischen Achse über Stifte an der Rückseite des Gehäuses erfolgt.

Die Anzahl von Lichtquellen innerhalb der Leuchtmatrix eines Scheinwerfers bestimmt die Auflösung des Lichtbildes und den Detaillierungsgrad, mit welchem innerhalb einer Lichtverteilung Bereiche entweder gezielt ausgeblendet bzw. stärker oder schwächer angestrahlt werden können. Es können beispielsweise auf einer Straße entgegenkommende Fahrzeuge gezielt ausgeblendet werden, um diese nicht zu blenden, oder selektiv Verkehrszeichen stärker angeleuchtet werden, um deren Lesbarkeit zu erhöhen. Grundsätzlich wird innerhalb einer Lichtverteilung meist eine höhere Auflösung im Bereich der Mitte der Lichtverteilung, also vor dem Fahrzeug, benötigt als am Rand der Lichtverteilung, d.h. am Straßenrand. Somit nimmt die Anzahl der Lichtquellen oft von der Mitte ausgehend zu Rand hin ab. Gleichzeitig ist das Intensitätsmaximum der Lichtverteilung meist in der Mitte der Lichtverteilung ausgeprägt, und die Intensität nimmt zum Rand hin ab. Somit können beispielsweise die Lichtauskoppelflächen, ausgehend von der Mitte einer Beleuchtungsreihe bis hin zum Rand, größer werden, um dieser gewünschten Helligkeits-Verringerung Rechnung zu tragen.

Wird eine Vielzahl von Lichtquellen und eine Vielzahl von Primäroptiken einander zugeordnet und zueinander positioniert, so kann durch eine unpräzise Anordnung der Lichtquellen auf der Leiterplatte oder der Primäroptiken im Halter die Einkopplung des emittierten Lichts in die Primäroptik ungünstig beeinträchtigt werden.

Eine Aufgabe der vorliegenden Erfindung liegt darin, den optischen Wirkungsgrad des Kraftfahrzeugscheinwerfers der eingangs genannten Art zu erhöhen.

Die Erfindung ist auf ein Verfahren zur Justierung einer Vielzahl von Lichtquellen und Primäroptiken gemäß Anspruch 1 gelöst. Die abhängigen Ansprüche beschreiben optionale Merkmale der Erfindung.

Die Aufgabe wird ausgehend von einem Lichtmodul bzw. Kraftfahrzeugscheinwerfer der eingangs genannten Art (die nicht als solches zur Erfindung gemäß den Ansprüchen gehören) gelöst, wobei:
die Lichtquellen, welche jeweils eine lichtemittierende Fläche aufweisen und auf einer gemeinsamen Leiterplatte angeordnet sind,
wobei für die Leiterplatte ein Leiterplatten-Referenzpunkt und eine Licht-Referenzebene bezüglich der Leiterplatte bestimmbar ist, wobei die Licht-Referenzebene durch zumindest drei Licht-Referenzpunkte definiert ist, und vorzugsweise der Leiterplatten-Referenzpunkt in der Licht-Referenzebene gelegen ist, und
die Primäroptiken aus der Vielzahl von Primäroptiken jeweils eine Lichteinkoppelfläche und jeweils eine Lichtauskoppelfläche aufweisen, und von einem gemeinsamen Halter in Position gehalten sind,
wobei jeder Lichtquelle aus der Vielzahl von Lichtquellen jeweils eine Primäroptik aus der Vielzahl von Primäroptiken zugeordnet ist,
und jede Lichtquelle aus der Vielzahl von Lichtquellen eingerichtet ist, Licht von der jeweiligen lichtemittierenden Fläche zu emittierten und in die jeweilig zugeordnete Lichteinkoppelfläche einzukoppeln, und
für den Halter ein Halter-Referenzpunkt und eine Optik-Referenzebene bezüglich des Halters bestimmbar ist, welche Optik-Referenzebene durch zumindest drei Optik-Referenzpunkte definiert ist und in welcher vorzugsweise auch der Halter-Referenzpunkt gelegen ist,
und zumindest drei Abstandsmittel zwischen der Leiterplatte, oder einem Bauteil oder einem Bauteilverbund, mit welchem die Leiterplatte mechanisch fest verbunden ist, und dem Halter, oder einem Bauteil oder einem Bauteilverbund, mit welchem der Halter mechanisch fest verbunden ist, jeweils an den Licht-Referenzpunkten und den Optik-Referenzpunkten angeordnet sind,
wobei die Längen und Orientierungen der zumindest drei Abstandsmittel in dem Lichtmodul gemäß einer Transformationsfunktion festgelegt sind, welche die geometrische Transformation zwischen dem Leiterplatten-Referenzpunkt und dem Halter-Referenzpunkt und zwischen einer Licht-Referenzebene und einer Optik-Referenzebene beschreibt,
   wobei aus der räumlichen Position und/oder Orientierung der lichtemittierenden Flächen der Lichtquellen bezüglich der Licht-Referenzebene und dem Leiterplatten-Referenzpunkt eine Licht-Ebene gebildet wird, und
   aus der räumlichen Position und/oder Orientierung der Lichteinkoppelflächen der Primäroptiken bezüglich der Optik-Referenzebene und dem Halter-Referenzpunkt eine Optik-Ebene gebildet wird, und
   die Licht-Ebene bezüglich der Optik-Ebene so ausgerichtet ist, dass möglichst viel Licht von lichtemittierenden Flächen emittiert und in die jeweilig zugeordneten Lichteinkoppelfläche eingekoppelt wird, und
   ein Abstands-Tripel von Stützstellen-Paaren aus der Transformationsfunktion bestimmt wird, welche Stützstellen-Paare jeweils zwischen den Licht-Referenzpunkten und den Optik-Referenzpunkten verlaufen,
   und die zumindest drei Abstandsmittel hinsichtlich Betrag und Richtung die Stützstellen-Paare des Abstands-Tripels verwirklichen.

Die Lichtquellen sind auf der Leiterplatte angeordnet und an Lötstellen jeweils durch Lot angebracht und kontaktiert. Im Zuge des Lötprozesses kann es dazu kommen, dass die Lichtquellen, vorzugsweise Halbleiterlichtquellen und beispielsweise in Form von Leuchtdioden, gegenüber einer Soll-Position oder einer Soll-Orientierung gegenüber des Referenzpunktes bzw. der Licht-Referenzebene der Leiterplatte, z.B. deren Oberfläche, verschoben oder räumlich gedreht sind. Die Lichtquellen werden elektrisch angesteuert, wobei die elektrische Verdrahtung in Form von Leiterbahnen auf der Leiterplatte vorgesehen ist.

Eine Abweichung zur Soll-Position oder Soll-Orientierung gegenüber des Referenzpunktes bzw. der Licht-Referenzebene der Leiterplatte bzw. gegenüber des Referenzpunktes bzw. der Optik-Referenzebene des Halters kann im Laufe der Montage von den Lichtquellen auf der Leiterplatte entstehen. Die Abstrahlvektoren der Lichtquellen stehen häufig bauartbedingt mit der Lage der lichtemittierenden Fläche der Lichtquellen in einem festen Zusammenhang.

Die Licht-Ebene kann um einen räumlichen Licht-Winkel bezüglich der Licht-Referenzebene geneigt sein. Gleichermaßen kann die Optik-Ebene um einen räumlichen Optik-Winkel bezüglich der Optik-Referenzebene geneigt sein.

Ist die Licht-Ebene einmal aus der Licht-Referenzebene, bzw. die Optik-Ebene aus der Optik-Referenzebene bestimmt, so bleibt der jeweilige Zusammenhang, im weiteren als Offset bezeichnet, im weiteren Verlauf der Justierung und in der endgültigen Anordnung des Kraftfahrzeugscheinwerfers bestehen. Somit gelten die weiteren Betrachtungen hinsichtlich der Abstände in und quer zu den Ebenen/ Referenzebenen und der Winkellage untereinander gleichermaßen, aber jeweils mit einem jeweiligen Offset versehen.

In der Anordnung des Kraftfahrzeugscheinwerfers sind die Licht-Referenzebene und die Optik-Referenzebene meist einfach und gut erfassbar, beispielsweise in Form der Oberfläche der Leiterplatte oder des Halters, und daher wird auf die Licht- und Optik-Referenzebenen Bezug genommen, statt auf die ermittelte Licht- und Optik-Ebene.

Folglich lassen sich die nachfolgenden Betrachtungen gleichermaßen auf die Licht- und Optik-Ebene anwenden, jedoch muss zusätzlich der ermittelte Offset berücksichtigt werden. Die Licht- und Optik-Ebene sind virtuelle Ebenen, welche beispielsweise in Form von Durchschnittswerten durch Konturen von mehreren Bauteilen, beispielsweise Lichtquellen oder Lichteintrittsflächen von Primäroptiken, gebildet werden können.

Der Offset kann durch die berechnete Transformationsfunktion ermittelt werden.

Die Leiterplatte kann auf einem Kühlkörper befestigt sein, welcher beispielsweise mit einen Zusatzhalter oder Tagrahmen verbunden ist. Der Kühlkörper und der Zusatzhalter bilden einen Bauteilverbund, mit welchem die Leiterplatte mechanisch fest verbunden ist. Die drei Abstandsmittel liegen in diesem Fall auf dem Zusatzhalter des Bauteilverbunds auf, und verbinden die Leiterplatte mit dem Halter.

Ein Bauteil oder ein Bauteilverbund, an welchem die Leiterplatte befestigt ist, kann einen Bauteil-Referenzpunkt aufweisen. Der Bauteil-Referenzpunkt liegt in einem festen, bekannten Verhältnis zum Leiterplatten-Referenzpunkt. Daher kann der Bauteil-Referenzpunkt auch zum Justieren als Referenzpunkt herangezogen werden und beispielsweise alternativ zum Leiterplatten-Referenzpunkt verwendet werden.

Durch die erfindungsgemäße Anordnung wird erreicht, dass die Effizienz der Einkopplung von emittiertem Licht in die Primäroptik durch eine einfache und kostengünstige Weise verbessert wird.

Unter einer hohen Effizienz einer Einkopplung von Licht in eine Optik wird verstanden, dass möglichst viel eines von einer Lichtquelle emittierten Lichts in eine Optik überführt wird, das heißt möglichst wenig emittiertes Licht beispielsweise durch Reflexionsverluste an den Mediengrenzen zwischen der Lichtquelle und dem Übertragungsmedium, in diesem Beispiel Luft, oder dem Übertragungsmedium und der Optik, beispielsweise einer Lichteintrittsfläche der Optik, nicht zur weiter vorgesehenen, nachfolgenden optischen Nutzung zur Verfügung steht bzw. durch unzureichende Ausrichtung der Optik zur Lichtquelle verloren geht..

Gemäß der Erfindung kann durch eine Anpassung der Licht-Ebene bezüglich der Optik-Ebene unter Berücksichtigung von Referenzpunkten auf der Leiterplatte und dem Halter erreicht werden, dass sowohl die Positionen als auch die Orientierungen der Lichtquellen bezüglich der zugeordneten Primäroptiken insgesamt, das heißt über die Gesamtheit der Vielzahl von Lichtquellen und der Gesamtheit der Vielzahl von Primäroptiken verbessert werden. Dadurch kann die Einkopplung von Licht der Lichtquellen in die Primäroptiken in der Gesamtheit gesteigert werden.

Unter einer Lichteinkoppelfläche wird im Rahmen dieser Erfindung eine erste Stirnfläche eines optischen Lichtleiters verstanden, welche im Wesentlichen normal zum Pfad der Längsausbreitung im Lichtleiter orientiert ist, und in welche Licht eingekoppelt werden kann; dieses Licht wird von dem optischen Lichtleiter möglichst verlustarm zu einer zweiten, der ersten Stirnseite gegenüberliegenden Stirnseite geleitet und über die zweite Stirnseite, die als Lichtauskoppelfläche bezeichnet wird, aus dem Lichtleiter ausgekoppelt und abgestrahlt.

Die Lichteinkoppelfläche kann beispielsweise eine plane, eine konvexe oder auch konkave Form aufweisen, um an eine spezifische Lichtquelle angepasst zu sein und eine möglichst hohe Einkopplung von der Lichtquelle emittiertem Licht in den Lichtleiter zu ermöglichen. Ein Einkoppelvektor bezeichnet jene Richtung im Raum, aus der Licht maximal in den Lichtleiter eingekoppelt wird. Natürlich kann Licht auch aus anderen Richtungen eingekoppelt werden, wobei aber höhere optische Verluste, beispielsweise durch Reflexion an der Oberfläche der Lichteinkoppelfläche oder längere optische Wege der eingekoppelten Lichts durch das optische Medium des Lichtleiters, auftreten können.

Die Winkelabhängigkeit der Intensität empfangener oder gesendeter Lichtenergie, meist bezogen auf eine Hauptrichtung, wird als Abstrahlcharakteristik oder Empfangscharakteristik bezeichnet. Ist die Abstrahl- bzw. Empfangscharakteristik über den Raumwinkel nicht gleichmäßig, wird dies als nicht isotrop bezeichnet, und es liegt eine Richtwirkung vor.

Lichteinkoppelflächen von Lichtleitern weisen häufig nicht-isotrope Empfangscharakteristiken auf. Für eine Lichteinkoppelfläche des Lichtleiters kann mittels einem Einkoppelvektor die Richtung des Maximums der Empfangscharakteristik angegeben werden, wobei die Richtung des Einkoppelvektors hin zur Lichteinkoppelfläche gerichtet ist.

Leuchtdioden weisen häufig nicht-isotrope Abstrahlcharakteristiken auf. Für eine Lichtemissionsfläche der Leuchtdiode kann mittels einem Abstrahlvektor die Richtung des Maximums der Abstrahlcharakteristik angegeben werden, wobei die Richtung des Abstrahlvektors weg von der Lichtemissionsfläche gerichtet ist.

Bevorzugt kann zwischen der lichtemittierenden Fläche der jeweiligen Lichtquelle aus der Vielzahl von Lichtquellen und der Lichteinkoppelfläche der jeweils zugeordneten Primäroptik aus der Vielzahl von Primäroptiken jeweils ein Abstandsmaß normal zu der Licht-Referenzebene und der Optik-Referenzebene, welche im nicht-justierten Zustand zueinander parallel verlaufen, bestimmt werden.

Die Abstandsmaße werden vor der Justierung ermittelt und daher bezüglich der jeweiligen Referenzebene angegeben. Durch die Justierung werden Abstände zwischen den jeweiligen Lichtquellen und Primäroptiken bezüglich der Licht- bzw. Optik-Ebene eingestellt, welche Abstände im justierten Zustand größer als Null sind.

Dadurch wird erreicht, dass sich die optischen Bauelemente Lichtquellen und Primäroptik nicht berühren, was genützt werden kann, um beispielsweise eine thermische Entkopplung zwischen den beiden Bauelementen zu erreichen. Dies verlängert die Lebensdauer der Bauteile.

Besonders bevorzugt ist aus den Abstandsmaßen durch die Transformationsfunktion ein Ebenen-Abstand ableitbar, welcher den Abstand zwischen der Leiterplatte und dem Halter im Leiterplatten-Referenzpunkt der Leiterplatte oder im Halter-Referenzpunkt des Halters beschreibt, wobei vorzugsweise der Ebenen-Abstand so bestimmt ist, sodass ein vorbestimmter Minimalabstand für alle Abstandsmaße eingestellt ist.

Durch die Transformationsfunktion wird der physikalische Abstand zwischen der Leiterplatte und dem Halter bestimmt, der in der gemeinsamen Anordnung durch Abstandsmittel eingestellt wird. Implizit erfolgt jedoch eine verbesserte Ausrichtung der Lichtquellen zu den zugeordneten Primäroptiken, und somit eine verbesserte Effizienz der Einkopplung in die Primäroptiken von emittiertem Licht. Gleichzeitig wird ein Mindestabstand eingestellt, um unerwünschte mechanische oder thermische Einflüsse auf die Anordnung während des Betriebs in einem Kraftfahrzeugscheinwerfer zu reduzieren oder zu verhindern.

Dadurch wird erreicht, dass sich die optischen Bauelemente Lichtquellen und Primäroptik nicht berühren, was genützt werden kann, um beispielsweise eine mechanische Entkopplung zwischen zwei optischen Bauelementen zu erreichen. Dies kann die Lebensdauer der Bauteile des Scheinwerfers verlängern beziehungsweise die optischen Eigenschaften der Bauteile erhalten. Gleichzeitig wird der Ebenen-Abstand so klein wie möglich eingestellt, um eine bestmögliche Einkoppeleffizienz des von den Lichtquellen emittierten Lichts in die Primäroptik sicherzustellen.

Es ist günstig, wenn ausgehend von einem von der lichtemittierenden Fläche der jeweiligen Lichtquelle aus der Vielzahl von Lichtquellen emittierten Licht, bevorzugt in die Richtung eines Abstrahlvektors, und von einem, in die Lichteinkoppelfläche der jeweiligen Primäroptik aus der Vielzahl von Primäroptiken eingekoppelten Licht, bevorzugt in der Richtung eines Einkoppelvektors, für jedes Paar von Lichtquelle und zugeordneter Primäroptik ein jeweiliges Orientierungsmaß bestimmbar ist, bevorzugt aus der räumlichen Winkeldifferenz zwischen dem Abstrahlvektor und dem Einkoppelvektor.

Dadurch wird eine gute optische Kopplung zwischen den beiden Bauelementen erreicht, was zu einem verbesserten optischen Wirkungsgrad führt.

In einer Weiterentwicklung der Erfindung ist zwischen der Licht-Referenzebene und der Optik-Referenzebene bezüglich des Leiterplatten-Referenzpunktes und des Halter-Referenzpunktes eine Ebenen-Verschiebung und/oder eine Ebenen-Neigung um zumindest eine Achse der Licht-Referenzebene und/oder der Optik-Referenzebene bestimmbar, bei welcher die jeweiligen Orientierungsmaße minimiert sind, und bevorzugt die jeweiligen Orientierungsmaße von zumindest 75% aller Paare von Lichtquelle und zugeordneter Primäroptik minimiert sind.

Mit anderen Worten können die Ebenen der Licht-Ebene und der Optik-Ebene bezüglich des Leiterplatten-Referenzpunktes und des Halter-Referenzpunktes untereinander, beispielsweise in einer x/y-Ebene, verschoben werden. Alternativ oder zusätzlich können diese beiden Ebenen um zumindest eine Achse der Licht-Ebene und/oder der Optik-Ebene gedreht werden. Zur Bestimmung einer Ebenen-Verschiebung bzw. -Neigung kann das Orientierungsmaß herangezogen werden, durch welches besonders einfach eine Fehlstellung der optischen Bauelemente Lichtquellen und Primäroptik untereinander bestimmt werden kann.

Die Transformationsfunktion kann dabei die Ebenen-Verschiebung so bestimmen, sodass die jeweiligen Orientierungsmaße minimiert sind, und bevorzugt die jeweiligen Orientierungsmaße von zumindest 75% aller Paare von Lichtquelle und zugeordneter Primäroptik minimiert sind. Dadurch wird eine besonders einfache Bestimmung der Fehlstellung der optischen Bauelemente Lichtquellen und Primäroptik untereinander erreicht.

Bevorzugt liegen die Positionen der lichtemittierenden Flächen der Lichtquellen approximiert in der Licht-Ebene, und/oder liegen die Positionen der Lichteinkoppelflächen der Primäroptiken approximiert in der Optik-Ebene, wobei vorzugsweise die Approximation der Ebenen durch Bestimmung jeweils einer Best-Fit-Ebene erfolgt.

In diesem Zusammenhang wird unter dem Approximieren verstanden, dass eine Ebene durch eine Vielzahl an im Raum verteilten Punkten gelegt wird, wobei die Ebene die Vielzahl an Punkten repräsentieren soll. Dabei ist eine Best-Fit-Ebene für den Fachmann ein mathematisch bekannter Begriff.

Die Richtung der Abstandsmittel verläuft bevorzugt normal zur Optik-Referenzebene.

Es ist günstig, wenn die Abstandsmittel in Form jeweils einer Anpassplatte, welche vorzugsweise zwischen dem Halter und der Leiterplatte angeordnet sind, ausgebildet sind, wobei zusätzlich jeweils ein Verbindungsmittel vorzugsweise in Form einer Schraube vorgesehen ist, und die Verbindungsmittel den Halter mit der Leiterplatte fest verbinden, vorzugsweise über einen Zusatzhalter und einen mit diesem fest verbundenen Kühlkörper.

Es ist auch günstig, wenn die Abstandsmittel durch Abstandsmittel vorzugsweise jeweils in Form einer Anpassplatte, welche vorzugsweise zwischen dem Halter und einem Zusatzhalter angeordnet sind, ausgebildet sind, und zusätzlich jeweils ein verstellbares Verbindungsmittel vorzugsweise in Form einer Schraube, und eine elastische Befestigungsklammer aufweisen, wobei die Befestigungsklammer den Halter mit der Leiterplatte verbindet, vorzugsweise über einen Zusatzhalter und einen mit diesem fest verbundenen Kühlkörper. Der Zusatzhalter dient als mechanischer Adapter zwischen zwei Bauteilen.

Es ist vorteilhaft, wenn die Abstandsmittel durch Abstandsmittel vorzugsweise in Form einer Anpassplatte, welche vorzugsweise zwischen dem Halter und dem Zusatzhalter angeordnet ist, ausgebildet sind, welche zusätzlich jeweils ein verstellbares Verbindungsmittel vorzugsweise in Form eines Klebstoffs aufweisen, wobei der Klebstoff den Halter mit der Leiterplatte verbindet, vorzugsweise über einen Zusatzhalter und einen mit diesem fest verbundenen Kühlkörper.

Es ist besonders vorteilhaft, wenn die Abstandsmittel verstellbare Verbindungsmittel vorzugsweise in Form von Schrauben, und elastische Befestigungsklammern aufweisen, wobei die Befestigungsklammer den Halter mit der Leiterplatte verbindet, vorzugsweise über einen Zusatzhalter und einen mit diesem fest verbundenen Kühlkörper und die Verbindungsmittel die Befestigungsklammern mit dem Zusatzhalter fest verbinden und die Verbindungsmittel die Befestigungsklammern mit dem Halter fest verbinden.

Es ist auch günstig, wenn die Abstandsmittel, welche vorzugsweise einstückig mit dem Halter gebildet sind, Verbindungsmittel aufweisen, vorzugsweise in Form von Schrauben, wobei die Verbindungsmittel den Halter mit der Leiterplatte fest verbinden, vorzugsweise über einen Zusatzhalter mit einer Auflagefläche und einen mit dem Zusatzhalter fest verbundenen Kühlkörper wobei der Halter oder der Zusatzhalter in der Form, insbesondere der Lage oder Orientierung der Auflagefläche oder einer korrespondierenden Auflagefläche des Halters so angepasst ist, sodass eine optimale Höhe für die Abstandsmittel erreicht wird, und vorzugsweise der Zusatzhalter ferner einen Zentrierdom aufweist, welcher mit einer korrespondierenden Zentrieröffnung auf dem Halter zusammenwirkt, um eine gewünschte Ausrichtung zwischen dem Halter und der Leiterplatte zu erreichen.

Die erfindungsgemäße Aufgabe wird auch durch ein Verfahren der eingangs genannten Art gelöst, wobei:
die Lichtquellen aus der Vielzahl von Lichtquellen jeweils eine lichtemittierende Fläche aufweisen und auf einer gemeinsamen Leiterplatte angeordnet sind,
und für die Leiterplatte ein Leiterplatten-Referenzpunkt und eine Licht-Referenzebene bezüglich der Leiterplatte bestimmbar ist, wobei die Licht-Referenzebene durch zumindest drei Licht-Referenzpunkte definiert ist und vorzugsweise der Leiterplatten-Referenzpunkt in der Licht-Referenzebene gelegen ist, und
die Primäroptiken aus der Vielzahl von Primäroptiken jeweils eine Lichteinkoppelfläche und jeweils eine Lichtauskoppelfläche aufweisen, und von einem gemeinsamen Halter in Position gehalten sind,
wobei jeder Lichtquelle aus der Vielzahl von Lichtquellen jeweils eine Primäroptik aus der Vielzahl von Primäroptiken zugeordnet ist,
und jede Lichtquelle aus der Vielzahl von Lichtquellen eingerichtet ist, Licht von der jeweiligen lichtemittierenden Fläche zu emittierten und in die jeweilig zugeordnete Lichteinkoppelfläche einzukoppeln,
und für den Halter ein Halter-Referenzpunkt und eine Optik-Referenzebene bezüglich des Halters bestimmbar ist, welche Optik-Referenzebene durch zumindest drei Optik-Referenzpunkte definiert ist, in welcher vorzugsweise auch der Halter-Referenzpunkt gelegen ist,
und zumindest drei Abstandsmittel zwischen der Leiterplatte, oder einem Bauteil oder Bauteilverbund, mit welchem die Leiterplatte mechanisch fest verbunden ist, und dem Halter, oder einer Bauteil oder einem Bauteilverbund, mit welchem der Halter mechanisch fest verbunden ist, jeweils an den Licht-Referenzpunkten und den Optik-Referenzpunkten angeordnet sind,
wobei die Längen und die Orientierungen der zumindest drei Abstandsmittel gemäß einer Transformationsfunktion festgelegt sind, welche die geometrische Transformation zwischen dem Leiterplatten-Referenzpunkt und dem Halter-Referenzpunkt und zwischen einer Licht-Referenzebene und einer Optik-Referenzebene beschreibt,
   wobei aus der räumlichen Position und/oder Orientierung der lichtemittierenden Flächen der Lichtquellen bezüglich der Licht-Referenzebene und dem Leiterplatten-Referenzpunkt eine Licht-Ebene gebildet wird, und
   aus der räumlichen Position und/oder Orientierung der Lichteinkoppelflächen der Primäroptiken bezüglich der Optik-Referenzebene und dem Halter-Referenzpunkt eine Optik-Ebene gebildet wird, und
   die Licht-Ebene bezüglich der Optik-Ebene so ausgerichtet ist, dass möglichst viel Licht von lichtemittierenden Flächen emittiert und in die jeweilig zugeordneten Lichteinkoppelfläche eingekoppelt wird, und
   ein Abstands-Tripel von Stützstellen-Paaren aus der Transformationsfunktion bestimmt wird, welche Stützstellen-Paare jeweils zwischen den Licht-Referenzpunkten und den Optik-Referenzpunkten verlaufen,
   und die zumindest drei Abstandsmittel hinsichtlich Betrag und Richtung die Stützstellen-Paare des Abstands-Tripels verwirklichen.

Im Verfahren werden folgende Schritte ausgeführt:
- Erfassen der räumlichen Position und/oder Orientierung der lichtemittierenden Flächen der Lichtquellen aus der Vielzahl von Lichtquellen bezüglich der Licht-Referenzebene und dem Leiterplatten-Referenzpunkt durch eine Messvorrichtung,
- Berechnen einer Licht-Ebene aus den räumlichen Positionen und/oder Orientierungen den erfassten lichtemittierenden Flächen der Lichtquellen aus der Vielzahl von Lichtquellen durch eine von der Messvorrichtung umfasste Rechenvorrichtung,
- Erfassen der räumlichen Position und/oder Orientierung der Lichteinkoppelflächen der Primäroptiken aus der Vielzahl von Primäroptiken bezüglich der Optik-Referenzebene und dem Halter-Referenzpunkt durch die Messvorrichtung,
- Berechnen einer Optik-Ebene aus den erfassten räumlichen Positionen und/oder Orientierungen der Lichteinkoppelflächen der Primäroptiken aus der Vielzahl von Primäroptiken durch die Rechenvorrichtung,
- Berechnen der Transformationsfunktion durch die Rechenvorrichtung,
- Bestimmen eines Abstands-Tripels von Stützstellen-Paaren aus der Transformationsfunktion durch die Rechenvorrichtung,
- Anordnen von zumindest drei Abstandsmitteln zwischen der Leiterplatte, oder einem Bauteil oder einem Bauteilverbund, mit welchem die Leiterplatte mechanisch fest verbunden ist, und dem Halter an den Licht-Referenzpunkten und den Optik-Referenzpunkten,
- Ausrichten des Halters in der Licht- bzw. Optik-Ebene gemäß der jeweiligen Referenzpunkte,
- Fixieren des Halters durch zumindest ein Verbindungsmittel.

Durch das erfindungsgemäße Verfahren wird erreicht, dass die Effizienz der Einkopplung von emittiertem Licht in die Primäroptik durch eine einfache und kostengünstige Weise verbessert wird.

Als Verbindungsmittel können z.B. Schrauben oder Klebstoff dienen.

Falls Schrauben als Verbindungsmittel verwendet werden, kann durch im Halter entsprechend groß ausgeführte Öffnungen zur Aufnahme der Schrauben eine Ausrichtung in der Licht- bzw. Optik-Ebene erfolgen.

Eine bevorzugte Weiterentwicklung des Verfahrens besteht darin, dass zwischen der lichtemittierenden Fläche der jeweiligen Lichtquelle aus der Vielzahl von Lichtquellen und der Lichteinkoppelfläche der jeweils zugeordneten Primäroptik aus der Vielzahl von Primäroptiken jeweils ein Abstandsmaß normal zu der Licht-Referenzebene und der Optik-Referenzebene, welche im nicht-justieren Zustand zueinander parallel verlaufen, durch die Rechenvorrichtung ermittelt wird.

Es ist vorteilhaft, wenn aus den Abstandsmaßen durch die Transformationsfunktion ein Ebenen-Abstand ermittelt wird, welcher den Abstand zwischen der Leiterplatte und dem Halter im Leiterplatten-Referenzpunkt der Leiterplatte oder im Halter-Referenzpunkt des Halters beschreibt, wobei vorzugsweise der Ebenen-Abstand so bestimmt wird, sodass ein vorbestimmter Minimalabstand für alle Abstandsmaße eingestellt ist.

Es ist günstig, wenn die jeweilige Lichtquelle aus der Vielzahl von Lichtquellen eingerichtet ist, Licht von der lichtemittierende Fläche zu emittieren, bevorzugt in die Richtung eines Abstrahlvektors, und in die Lichteinkoppelfläche der jeweils zugeordneten Primäroptik aus der Vielzahl von Primäroptiken einzukoppeln, bevorzugt aus der Richtung eines Einkoppelvektors, und für jedes Paar von Lichtquelle und zugeordneter Primäroptik ein jeweiliges Orientierungsmaß durch die Rechenvorrichtung ermittelt wird, welches der Einkopplung des jeweils emittierten Lichts und dem jeweils eingekoppelten Lichts entspricht, und welcher bevorzugt aus der räumlichen Winkeldifferenz zwischen dem Abstrahlvektor und dem Einkoppelvektor ermittelt wird.

Außerdem ist es günstig, wenn eine Ebenen-Verschiebung zwischen der Licht-ReferenzEbene und der Optik-ReferenzEbene bezüglich des Leiterplatten-Referenzpunktes und des Halter-Referenzpunktes und/oder eine Ebenen-Neigung, um zumindest eine Achse der Licht-ReferenzEbene und/oder der Optik-ReferenzEbene erreicht wird, bevorzugt aus dem jeweiligen Orientierungsmaß, sodass die jeweiligen Orientierungsmaße minimiert werden, und bevorzugt die jeweiligen Orientierungsmaße von zumindest 75% aller Paare von Lichtquelle und zugeordneter Primäroptik minimiert werden.

Die Orientierungsmaße werden vor der Justierung ermittelt und daher bezüglich der jeweiligen Referenzebene angegeben. Durch die Justierung werden Orientierungen zwischen den jeweiligen Lichtquellen und Primäroptiken bezüglich der Licht- bzw. Optik-Ebene eingestellt.

Damit kann erreicht werden, dass im justierten Zustand die Licht-Ebene und die Optik-Ebene zueinander parallel verlaufen, und außerdem einen Minimalabstand aufweisen. Der Minimalabstand ist der kleinste Abstand, der beispielsweise Aufgrund von mechanischen oder thermischen Anforderungen an die Anordnung von Lichtquellen und Primäroptik zueinander eingehalten werden muss, um einen zuverlässigen Betrieb in einem Kraftfahrzeugscheinwerfer zu ermöglichen.

Es ist bevorzugt, wenn die Positionen der lichtemittierenden Flächen der Lichtquellen approximiert in der Licht-Ebene gelegen sind, und/oder die Positionen der Lichteinkoppelflächen der Primäroptiken approximiert in der Optik-Ebene gelegen sind, wobei vorzugsweise die Approximation der Ebenen durch Bestimmung jeweils einer Best-Fit-Ebene erfolgt.

Es ist besonders bevorzugt, wenn die Richtung der Abstandsmittel normal zur Optik-Referenzebene verläuft.

Durch die Weiterbildungen des erfindungsgemäßen Verfahrens werden auch die Vorteile der erfindungsgemäßen Vorrichtung erreicht.

Es ist dem Fachmann klar, dass ein Lichtmodul oder ein Kraftfahrzeugscheinwerfer für ein Kraftfahrzeug, wie insbesondere ein PKW oder Motorrad, noch viele andere, nicht erwähnte

Teile enthält, wie beispielsweise Kühlvorrichtungen für Bauteile, Ansteuerungselektronik, weitere optische Elemente, mechanische Verstelleinrichtungen beziehungsweise Halterungen. Es ist auch klar, dass ein Lichtmodul Teil eines Kraftfahrzeugscheinwerfers ist.

Die Erfindung und weitere Vorteile werden im Folgenden anhand von nicht einschränkenden Ausführungsbeispielen näher beschrieben, die in den beiliegenden Zeichnungen veranschaulicht sind. Die Zeichnungen zeigen in
- Fig. 1: ein erstes Ausführungsbeispiel eines erfindungsgemäßen Kraftfahrzeugscheinwerfers in einer Längsschnittansicht,
- Fig. 2: eine Aufsicht auf einen Halter mit Primäroptiken des Scheinwerfers nach der Fig. 1,
- Fig. 3: eine schematische Seitenansicht des Scheinwerfers nach der Fig. 1 in einer ersten Montageposition,
- Fig. 4: eine schematische Seitenansicht des Scheinwerfers nach der Fig. 1 in einer zweiten Montageposition,
- Fig. 5: eine Erläuterung des prinzipiellen Aufbaus des Scheinwerfers nach der Fig. 1 in einer perspektivischen Ansicht,
- Fig. 6: ein zweites Ausführungsbeispiel eines erfindungsgemäßen Kraftfahrzeugscheinwerfers in einer Längsschnittansicht,
- Fig. 7: ein drittes Ausführungsbeispiel eines erfindungsgemäßen Kraftfahrzeugscheinwerfers in einer Längsschnittansicht,
- Fig. 8: ein viertes Ausführungsbeispiel eines erfindungsgemäßen Kraftfahrzeugscheinwerfers in einer Längsschnittansicht,
- Fig. 9: ein fünftes Ausführungsbeispiel eines erfindungsgemäßen Kraftfahrzeugscheinwerfers in einer Längsschnittansicht,
- Fig. 10: eine Aufsicht auf einen Halter mit Primäroptiken des Scheinwerfers nach der Fig. 9,
- Fig. 11: ein Ablaufdiagramm eines Ausführungsbeispiels eines erfindungsgemäßen Verfahrens,
- Fig. 12: eine Illustration des Verfahrensschritts zur Erfassung der räumlichen Position und/oder Orientierung der Lichteinkoppelflächen der Primäroptiken aus der Fig. 11,
- Fig. 13: eine Illustration des Verfahrensschritts zur Erfassung der räumlichen Position und/oder Orientierung der lichtemittierenden Flächen der Lichtquellen aus der Fig. 11.

In den Figuren sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Gehäuse, Ansteuerungselektronik, weitere optische Elemente wie eine Projektionsoptik, mechanische Verstelleinrichtungen beziehungsweise Halterungen nicht gezeigt. Die Kraftfahrzeugscheinwerfer der Figuren sind daher stark vereinfacht dargestellt und können beispielsweise auch als Lichtmodule eines Kraftfahrzeugscheinwerfers betrachtet werden.

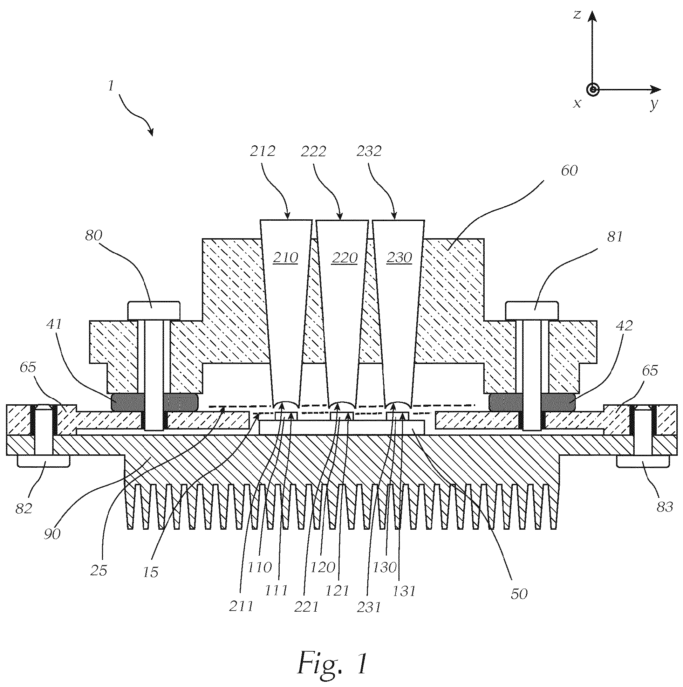

**Fig. 1** bis **Fig. 5** zeigen ein erstes Ausführungsbeispiel der Erfindung mit einem Kraftfahrzeugscheinwerfer 1, umfassend eine Vielzahl von Lichtquellen 110, 120, 130 und eine Vielzahl von Primäroptiken 210, 220, 230.

**Fig. 1** zeigt einen Schnitt durch den Kraftfahrzeugscheinwerfer 1 in einer Seitenansicht.

Die Gesamtheit der Lichtquellen 110, 120, 130 wird auch durch das Bezugszeichen 100 benannt.

Die Lichtquellen 110, 120, 130 weisen jeweils eine lichtemittierende Fläche 111, 121, 131 auf und sind auf einer gemeinsamen Leiterplatte 50 angeordnet.

Für die Leiterplatte 50 ist ein Leiterplatten-Referenzpunkt 51 und eine Licht-Referenzebene 10 bezüglich der Leiterplatte 50 bestimmbar. Die Licht-Referenzebene 10 ist durch zumindest drei Licht-Referenzpunkte 11, 12, 13 definiert und der Leiterplatten-Referenzpunkt 51 ist in der Licht-Referenzebene 10 gelegen.

Es ist klar, dass ein Bauteil oder ein Bauteilverbund, an welchem die Leiterplatte 50 befestigt ist, ebenfalls einen Bauteil-Referenzpunkt aufweisen kann. Der Bauteil-Referenzpunkt liegt in einem festen, bekannten Verhältnis zum Leiterplatten-Referenzpunkt 51, und daher kann der Bauteil-Referenzpunkt auch zum Justieren als Referenzpunkt herangezogen werden und beispielsweise alternativ zum Leiterplatten-Referenzpunkt 51 verwendet werden. Ein solcher Bauteilverbund kann beispielsweise einen Kühlkörper 90, einen Zusatzhalter 65, einen Tragrahmen oder dergleichen, umfassen.

Zur übersichtlicheren Darstellung sind in den Figuren lediglich der Referenzpunkt 51 und Lichtquellen, jedoch keine Leiterbahnen auf der Leiterplatte 50 eingezeichnet.

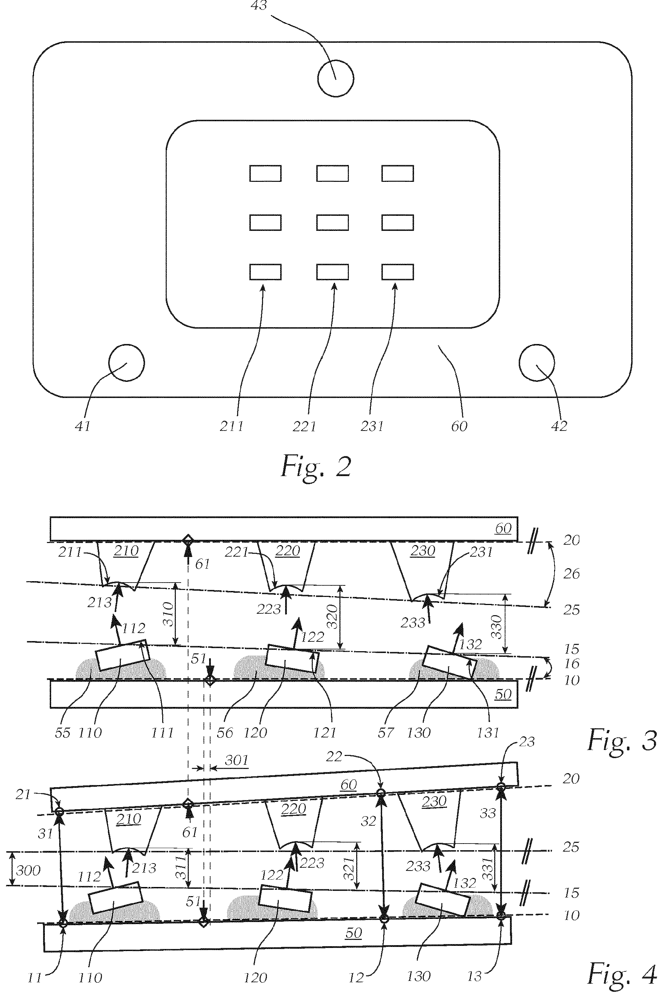

**Fig. 3** zeigt eine Anordnung in einer ersten Montageposition in einem nicht-justierten Zustand, also vor einer erfindungsgemäßen Justierung.

**Fig. 4** zeigt die Anordnung der Fig. 3 in einer zweiten Montageposition in einem justierten Zustand, also nach einer erfindungsgemäßen Justierung.

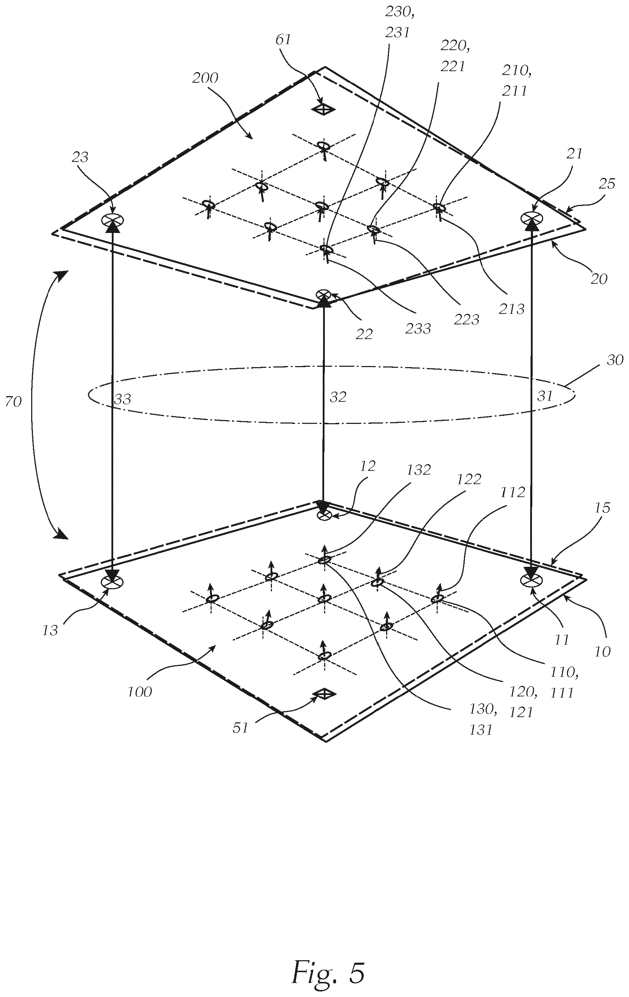

Fig. 3 und Fig. 4 zeigen beispielhafte Anordnungen der Lichtquellen 110, 120, 130, welche auf der Leiterplatte 50 angeordnet sind und an Lötstellen 55, 56, 57 jeweils durch Lot angebracht und kontaktiert sind. Im Zuge des Lötprozesses kann es dazu kommen, dass die Lichtquellen 110, 120, 130, vorzugsweise Halbleiterlichtquellen und beispielsweise in Form von Leuchtdioden, gegenüber einer Soll-Position oder einer Soll-Orientierung gegenüber des Referenzpunktes 51 bzw. der Licht-Referenzebene 10 der Leiterplatte 50, z.B. deren Oberfläche, verschoben oder räumlich gedreht sind. Im speziellen kann auch die Position der Leuchtdioden in der Höhe in z-Richtung beispielsweise aufgrund von unterschiedlich aufgebrachter Lot-Menge unterschiedlich sein, wodurch die lichtemittierenden Flächen 111, 121, 131 unterschiedliche Positionen aufweisen können. Die Verdrehungen sind in Fig. 4 und Fig. 5 zur Illustration stark übertrieben dargestellt. Die Lichtquellen 110, 120, 130 werden elektrisch angesteuert, wobei die (nicht gezeigte) elektrische Verdrahtung in Form von Leiterbahnen auf der Leiterplatte 50 vorgesehen ist.

Die Primäroptiken 210, 220, 230 weisen jeweils eine Lichteinkoppelfläche 211, 221, 231 und jeweils eine Lichtauskoppelfläche 212, 222, 232 auf und sind von einem gemeinsamen Halter 60 in Position gehalten.

Jeder Lichtquelle 110, 120, 130 ist jeweils eine Primäroptik 210, 220, 230 zugeordnet.

Die Gesamtheit der Primäroptiken 210, 220, 230 wird auch durch das Bezugszeichen 200 benannt.

Ein zentraler Teil dieser Anordnung, der Halter 60, ist in einer Ansicht auf die Lichteinkoppelflächen 211, 221, 231 in **Fig. 2** dargestellt. Zusätzlich sind Abstandsmittel 41, 42, 43 zu erkennen, welche auf dem Halter 60 angeordnet sind.

Jede Lichtquelle 110, 120, 130 ist eingerichtet, Licht von der jeweiligen lichtemittierenden Fläche 111, 121, 131 zu emittierten und in die jeweilig zugeordnete Lichteinkoppelfläche 211, 221, 231 einzukoppeln.

Für den Halter 60 ist ein Halter-Referenzpunkt 61 und eine Optik-Referenzebene 20 bezüglich des Halters 60 bestimmbar, welche Optik-Referenzebene 20 durch zumindest drei Optik-Referenzpunkte 21, 22, 23 definiert ist und in welcher auch der Halter-Referenzpunkt 61 gelegen ist.

**Fig. 3** und **Fig. 4** zeigen anhand von Beispielen Primäroptiken 210, 220, 230, welche in Position und Orientierung gegenüber einer Soll-Position oder einer Soll-Orientierung gegenüber des Referenzpunktes 61 bzw. der Optik-Referenzebene 20 des Halters 60, z.B. dessen Oberfläche, verschoben oder räumlich gedreht angeordnet sind, was durch Ungenauigkeiten und Toleranzen bei der Herstellung beim Halter 60 oder den Primäroptiken 210, 220, 230 hervorgerufen sein kann. Die Verdrehungen sind in Fig. 3 und Fig. 4 zur Illustration stark übertrieben dargestellt.

Es sind zumindest drei Abstandsmittel 41, 42, 43 zwischen einem Bauteilverbund, umfassend die Leiterplatte 50 und den Zusatzhalter 65, und dem Halter 60 jeweils an den Licht-Referenzpunkten 11, 12, 13 und den Optik-Referenzpunkten 21, 22, 23 angeordnet.

Die Leiterplatte 50 ist auf einem Kühlkörper 90 befestigt, welcher mit einen Zusatzhalter 65 verbunden ist. Der Kühlkörper 90 und der Zusatzhalter 65 bilden einen Bauteilverbund, mit welchem die Leiterplatte 50 mechanisch fest verbunden ist. Die drei Abstandsmittel 41, 42, 43 liegen somit auf dem Zusatzhalter 65 des Bauteilverbunds auf, und verbinden die Leiterplatte 50 mit dem Halter 60.Die Längen und Orientierungen der zumindest drei Abstandsmittel 41, 42, 43 sind gemäß einer Transformationsfunktion 70 festgelegt, welche die geometrische Transformation zwischen dem Leiterplatten-Referenzpunkt 51 und dem Halter-Referenzpunkt 61 und zwischen einer Licht-Referenzebene 10 und einer Optik-Referenzebene 20 beschreibt.

Mit anderen Worten beschreibt die Transformationsfunktion 70 eine geometrische Wechselbeziehung zwischen der Licht-Referenzebene 10 und der Optik-Referenzebene 20. Sie ist kein physisches Merkmal, sondern eine Rechengröße.

Aus der räumlichen Position und/oder Orientierung der lichtemittierenden Flächen 111, 121, 131 der Lichtquellen 110, 120, 130 bezüglich der Licht-Referenzebene 10 und dem Leiterplatten-Referenzpunkt 51 wird eine Licht-Ebene 15 gebildet.

Aus der räumlichen Position und/oder Orientierung der Lichteinkoppelflächen 211, 221, 231 der Primäroptiken 210, 220, 230 bezüglich der Optik-Referenzebene 20 und dem Halter-Referenzpunkt 61 wird eine Optik-Ebene 25 gebildet.

Die Licht-Ebene 15 ist bezüglich der Optik-Ebene 25 so ausgerichtet, dass möglichst viel Licht von lichtemittierenden Flächen 111, 121, 131 emittiert und in die jeweilig zugeordneten Lichteinkoppelfläche 211, 221, 231 eingekoppelt wird.

Es ist aus der Transformationsfunktion 70 ein Abstands-Tripel 30 von Stützstellen-Paaren 31, 32, 33 bestimmbar, welche jeweils zwischen den Licht-Referenzpunkten 11, 12, 13 und den Optik-Referenzpunkten 21, 22, 23 verlaufen.

Die zumindest drei Abstandsmittel 41, 42, 43 verwirklichen hinsichtlich Betrag und Richtung die Stützstellen-Paare 31, 32, 33 des Abstands-Tripels 30.

Der Halter 60 weist einen Halter-Referenzpunkt 61 und eine Optik-Referenzebene 20 auf dem Halter 60 auf. Die Optik-Referenzebene 20 ist durch zumindest drei Optik-Referenzpunkte 21, 22, 23 definiert, in welcher auch der Halter-Referenzpunkt 61 gelegen ist.

Es ist in Fig. 4 erkennbar, dass im justierten Zustand die Licht-Ebene 15 parallel zur Optik-Ebene 25 ist.

Die Fig. 5 zeigt schematisch die Anordnung von den Lichtquellen 110, 120, 130 mit jeweils zugehörigen Abstrahlvektoren 112, 122, 132 und Primäroptiken 210, 220, 230 mit jeweils zugehörigen Lichteinkoppelflächen 211, 221, 231, welche eine Abweichung zur Soll-Position oder Soll-Orientierung gegenüber des Leiterplatten-Referenzpunktes 51 bzw. der Licht-Referenzebene 10 der Leiterplatte 50 bzw. gegenüber des Halter-Referenzpunktes 61 bzw. der Optik-Referenzebene 20 des Halters 60, aufweisen. Die Abstrahlvektoren 112, 122, 132 stehen in der Regel bauartbedingt mit der Position und Orientierung der lichtemittierende Fläche 111, 121, 131 der Lichtquellen 110, 120, 130 in einem festen Zusammenhang.

Die Licht-Ebene 15 ist um einen räumlichen Licht-Winkel 16 bezüglich der Licht-Referenzebene 10 geneigt.

Die Optik-Ebene 25 ist um einen räumlichen Optik-Winkel 26 bezüglich der Optik-Referenzebene 20 geneigt.

Die Transformationsfunktion 70 kann insbesondere eine Verschiebung des Leiterplatten-Referenzpunktes 51 bezüglich des Halter-Referenzpunktes 61 quer zur Licht-Referenzebene 10 bzw. der Optik-Referenzebene 20 sowie eine räumliche Drehung dieser beiden Ebenen 10, 20 um die Winkel 16, 26 beschreiben. So können initiale Koppelabstände 310, 320, 330 zu reduzierten Koppelabständen 311, 321, 331 transformiert werden, wobei ein Mindest-Koppelabstand eingehalten werden kann, um keinen direkten mechanischen Kontakt zwischen einer Lichtquelle und einer Primäroptik herzustellen, was ansonsten in schwierigen Umgebungsbedingungen während des Betriebs des Kraftfahrzeugscheinwerfers 1 nachteilig sein kann.

Es ist klar, dass die Transformationsfunktion 70 sowohl den Fall einer Verschiebung in eine Richtung, als auch jenen in mehrere Richtungen beschreiben kann. Ebenso ist klar, dass die Transformationsfunktion 70 sowohl den Fall einer Drehung um eine Achse, als auch jenen um mehrere Achsen beschreiben kann. Ferner ist es dem Fachmann klar, dass die Transformationsfunktion 70 im Allgemeinen Kombinationen von einer oder mehreren Verschiebungen und von einer oder mehreren Drehungen beschreiben kann.

Das Abstands-Tripel 30 von Stützstellen-Paaren 31, 32, 33 ist in Fig. 5 symbolisch durch Doppelpfeile dargestellt, welche durch die Transformationsfunktion 70 abgebildet sind, und eine paarweise Zuordnung der Positionen der Stützstellen in den Licht-Referenzpunkten 11, 12, 13 mit den Stützstellen in den Optik-Referenzpunkten 21, 22, 23 beschreiben.

Durch die erfindungsgemäße Anordnung wird erreicht, dass die Effizienz der Einkopplung von emittiertem Licht in die Primäroptiken durch eine einfache und kostengünstige Weise verbessert wird.

Bevorzugt sind zwischen der lichtemittierenden Fläche 111, 121, 131 der jeweiligen Lichtquelle 110, 120, 130 und der Lichteinkoppelfläche 211, 221, 231 der jeweils zugeordneten Primäroptik 210, 220, 230 zumindest drei Abstandsmaße 310, 320, 330 normal zu der Licht-Referenzebene 10 und der Optik-Referenzebene 20, welche im nicht-justierten Zustand zueinander parallel verlaufen, definiert. Dadurch wird erreicht, dass sich die optischen Bauelemente Lichtquellen 110, 120, 130 und Primäroptik 210, 220, 230 nicht berühren, was genützt werden kann, um beispielsweise eine thermische Entkopplung zwischen den beiden Bauelementen zu erreichen. Dies kann der Lebensdauer der Bauteile nützen.

Besonders bevorzugt kann aus den Abstandsmaßen 310, 320, 330 mit Hilfe der Transformationsfunktion 70 ein Ebenen-Abstand 300 bestimmt werden, welcher den Abstand zwischen der Leiterplatte 50 und dem Halter 60 im Leiterplatten-Referenzpunkt 51 der Leiterplatte 50 oder im Halter-Referenzpunkt 61 des Halters 60 beschreibt, wobei vorzugsweise der Ebenen-Abstand 300 so bestimmt ist, sodass ein vorbestimmter Minimalabstand für alle Abstandsmaße 310, 320, 330 eingestellt ist. Dadurch wird erreicht, dass sich die optischen Bauelemente Lichtquellen 110, 120, 130 und Primäroptik 210, 220, 230 nicht berühren, was genützt werden kann, um beispielsweise eine mechanische Entkopplung zwischen zwei optischen Bauelementen zu erreichen. Dies verbessert die Lebensdauer der Bauteile.

Ausgehend von einem von der lichtemittierenden Fläche 111, 121, 131 emittierten Licht, und von einem, in die Lichteinkoppelfläche 211, 221, 231 eingekoppelten Licht, ist für jedes Paar von Lichtquelle 110, 120, 130 und zugeordneter Primäroptik 210, 220, 230 ein jeweiliges Orientierungsmaß bestimmbar.

Beispielsweise geschieht die Emission primär in die Richtung eines Abstrahlvektors 112, 122, 132, und beispielsweise erfolgt die Einkopplung aus der Richtung eines Einkoppelvektors 213, 223, 233.

Für jedes Paar von Lichtquelle 110, 120, 130 und zugeordneter Primäroptik 210, 220, 230 ergibt sich somit ein jeweiliges Orientierungsmaß, welches der Einkopplung des jeweils emittierten Lichts und dem jeweils eingekoppelten Lichts entspricht, und welches bevorzugt aus der räumlichen Winkeldifferenz zwischen dem Abstrahlvektor 112, 122, 132 und dem Einkoppelvektor 213, 223, 233 bestimmt ist. Durch eine gute optische Kopplung zwischen den beiden Bauelementen kann ein verbesserter optischer Wirkungsgrad des Scheinwerfers erreicht werden.

In einer Weiterentwicklung der Erfindung kann die Transformationsfunktion 70 hinsichtlich einer Ebenen-Verschiebung 301 zwischen der Licht-Referenzebene 10 und der Optik-Referenzebene 20 bezüglich des Leiterplatten-Referenzpunktes 51 und des Halter-Referenzpunktes 61 bestimmt werden. Alternativ oder zusätzlich kann die Transformationsfunktion 70 hinsichtlich einer Ebenen-Neigung 16, 26 um zumindest eine Achse der Licht-Referenzebene 10 und/oder der Optik-Referenzebene 20 bestimmt werden. Dadurch wird eine besonders einfache Bestimmung der Fehlstellung der optischen Bauelemente Lichtquellen 110, 120, 130 und Primäroptik 210, 220, 230 untereinander erzielt.

Die Transformationsfunktion 70 kann die Ebenen-Verschiebung 301 so festlegen, sodass die jeweiligen Orientierungsmaße minimiert sind, und bevorzugt die jeweiligen Orientierungsmaße von zumindest 75% aller Paare von Lichtquelle 110, 120, 130 und zugeordneter Primäroptik 210, 220, 230 minimiert sind. Dadurch wird eine besonders einfache Bestimmung der Fehlstellung der optischen Bauelemente Lichtquellen 110, 120, 130 und Primäroptik 210, 220, 230 untereinander erreicht.

Bevorzugt liegen die Positionen der lichtemittierenden Flächen 111, 121, 131 der Lichtquellen 110, 120, 130 approximiert in der Licht-Ebene 15, und/oder die Positionen der Lichteinkoppelflächen 211, 221, 231 der Primäroptiken 210, 220, 230 approximiert in der Optik-Ebene 25, wobei vorzugsweise die Approximation der Ebenen durch Bestimmung jeweils einer Best-Fit-Ebene erfolgt.

In diesem Zusammenhang wird unter dem Approximieren verstanden, dass eine Ebene durch eine Vielzahl an im Raum verteilten Punkten gelegt wird, wobei die Ebene die Vielzahl an Punkten repräsentieren soll. Die Best-Fit-Ebene wird nach einem bekannten mathematischen Anpassungsverfahren, beispielsweise der Methode der kleinsten Quadrate durchgeführt.

Es gibt viele verschiedene Möglichkeiten zur Ermittlung einer Approximation zum Bestimmen einer Ebene, welche zwischen einzelnen Punkten im Raum angenähert liegt. Beispielsweise können die Distanzen der Punkte zur Ebene, jeweils normal zur Ebene gemessen, im Durchschnitt minimiert werden. Alternativ kann die Ebene bestimmt werden, indem beispielsweise nur für eine Teilmenge der Punkte ein Durchschnittswert bestimmt wird. Diese Teilmenge kann dabei beispielsweise die zentral in der Ebene gelegenen Punkte definiert sein, wobei die zentral gelegenen Punkte für die zentral gelegenen Lichtanteile in einer Lichtverteilung eines Kraftfahrzeugscheinwerfers stehen sollen und entsprechen.

Andererseits können auch die Orientierungen der Abstrahlvektoren der Lichtquellen bzw. die Einkoppelvektoren der Primäroptiken zur Ermittlung einer Approximation zum Bestimmen der Ebene, welche zwischen einzelnen Punkten im Raum angenähert liegt, herangezogen werden. Dabei kann die Ebene so bestimmt werden, dass die Abstrahlvektoren der Lichtquellen und die Einkoppelvektoren der Primäroptiken zueinander möglichst gut ausgerichtet sind, oder dieser Aspekt für zumindest eine Teilmenge der Vektoren möglichst gut übereinstimmt.

Außerdem ist eine Kombination aus der zuvor genannten Distanz-basierten Approximation mit der unmittelbar zuvor genannten Vektor-basierten Approximation möglich. Bei dieser Approximations-Variante sind besonders gute Ergebnisse hinsichtlich Einkopplung von Licht bei Einhaltung eines vorgesehenen Mindestabstands für die Gesamtheit alle Bauteile (Vielzahl von Lichtquellen und Vielzahl von Primäroptiken) durch die ermittelte Lage der Best-Fit-Ebene erreichbar.

Die Approximation soll jeweils für die Gesamtheit, das heißt für die Vielzahl von Lichtquellen und Vielzahl von Primäroptiken bestimmt werden. Bei der Ermittlung können beispielsweise Maxima und Minima in der Position von einzelnen Lichtquellen und/ oder Primäroptiken bestimmt werden, und davon ausgehend durch Iteration die Best-Fit-Ebene ermittelt werden.

Ferner können in Kombination Parameter aus der Bestimmung der Transformationsfunktion in die Ermittlung der jeweiligen Best-Fit-Ebene herangezogen werden.

Im gezeigten Ausführungsbeispiel verläuft die Richtung der Abstandsmittel 41, 42, 43 normal zur Optik-Referenzebene 20.

Im Lichtmodul 1 der Fig. 1 sind die Abstandsmittel 41, 42, 43 beispielhaft in Form jeweils einer Distanz- oder Anpassplatte, welche vorzugsweise zwischen dem Halter 60 und einem Bauteilverbund, umfassend den Zusatzhalter 65, den Kühlkörper 90 und die Leiterplatte 50, angeordnet sind, ausgebildet. Eine Ausführungsform für die Anpassplatte ist beispielsweise eine Beilagscheibe mit einer gewünschten Höhe, oder eine in einen Halter integrierte Anpassung in Form einer Ausfräsung eines Bereichs im Halter, sodass ein Schraubenkopf als Verbindungsmittel in einer gewünschten Höhe eine entsprechend Auflage erhält.

Die Abstandsmittel 41, 42, 43 weisen jeweils eine Höhe auf, die durch das erfindungsgemäße Verfahren aus der Transformationsfunktion 70 bestimmt wurde. Durch die Höhe der Abstandsmittel 41, 42, 43 wird über zumindest drei Punkte ein Einstelldreieck aufgespannt, mit welchem unter anderem die Ausrichtung der Licht-Ebene 15 bezüglich der Optik-Ebene 25 erfolgt.

Es sind zusätzlich Verbindungsmittel 80, 81, vorzugsweise in Form einer Schraube, vorgesehen. Die Verbindungsmittel 80, 81 verbinden den Halter 60 mit der Leiterplatte 50 fest, vorzugsweise über einen Zusatzhalter 65 und einen mit diesem fest verbundenen Kühlkörper 90. Die Verbindungsmittel 80, 81 sind dazu vorgesehen, in Aufnahmen in Form von Öffnungen sowohl im Halter 60 als auch im Zusatzhalter 65 eingeführt zu werden. Die Öffnungen des Zusatzhalters 65 sind ferner jeweils mit einem Gewinde versehen, welches zur Aufnahme der Schrauben vorgesehen ist. Die Abstandsmittel 41, 42, 43 sind beispielsweise als Beilagscheiben mit individuell angepasster Höhe ausgeführt, durch welche Schrauben geführt sind.

Die Position der Abstandsmittel 41, 42, 43 beziehungsweise der Verbindungsmittel 80, 81 mit dazugehörigen Aufnahmen in Form von Öffnungen wird durch das erfindungsgemäße Verfahren aus der Transformationsfunktion 70 bestimmt. Durch die Position der Abstandsmittel 41, 42, 43 beziehungsweise der Verbindungsmittel 80, 81 mit dazugehörigen Aufnahmen wird über die zumindest drei zuvor genannten Punkte das Einstelldreieck aufgespannt, mit welchem auch die Ausrichtung des Leiterplatten-Referenzpunktes 51 bezüglich des Halter-Referenzpunktes 61 erfolgt.

Die Öffnungen zur Aufnahme der Verbindungsmittel 80, 81 im Halter 60 sind im Querschnitt größer als die darin aufgenommenen Schrauben, um während des Justiervorgangs eine Verschiebung in Richtung der Licht-Ebene 15 bezüglich der Optik-Ebene 25 zu ermöglichen.

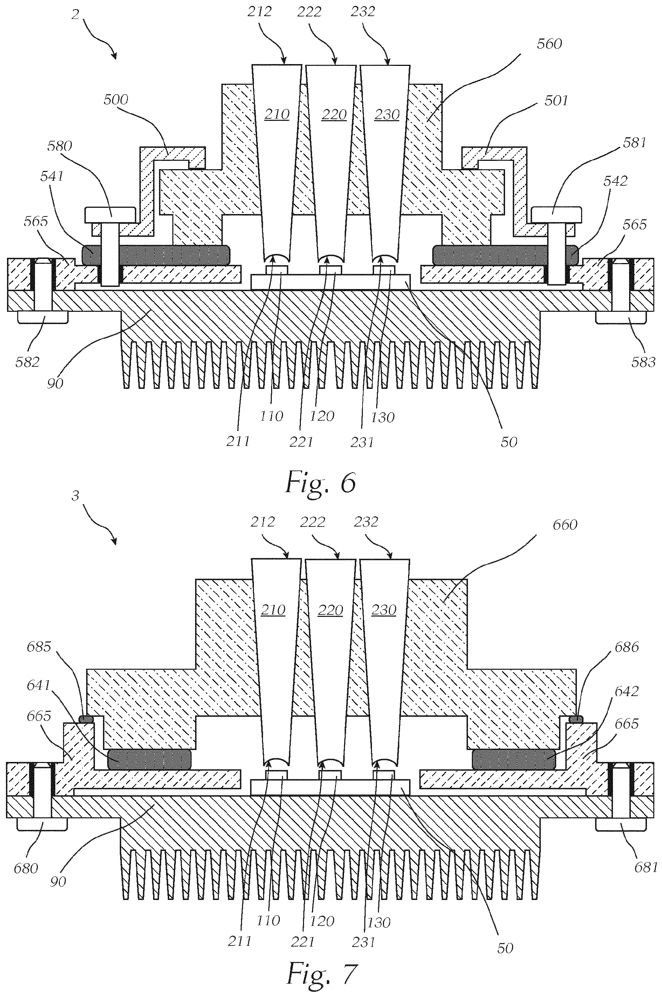

**Fig. 6** zeigt ein zweites Ausführungsbeispiel eines Kraftfahrzeugscheinwerfers 2. Die optischen Elemente, wie die Lichtquellen 110, 120, 130 und die Primäroptiken 210, 220, 230, entsprechen dem ersten Ausführungsbeispiel. Im Unterschied zur Fig. 1 sind die zumindest drei Abstandsmittel 41, 42, 43 durch Abstandsmittel 541, 542 jeweils in Form einer Anpassplatte, welche vorzugsweise zwischen dem Halter 560 und einem Zusatzhalter 565 angeordnet sind, ausgebildet und weisen zusätzlich jeweils ein verstellbares Verbindungsmittel 580, 581 auf, vorzugsweise in Form einer Schraube, und eine elastische Befestigungsklammer 500, 501, wobei die Befestigungsklammer 500, 501 den Halter 560 mit der Leiterplatte 50 verbindet, vorzugsweise über einen Zusatzhalter 565 und einen mit diesem fest verbundenen Kühlkörper 90. Die weiteren Ausführungen entsprechen jenen des ersten Ausführungsbeispiels.

In diesem Ausführungsbeispiel ist ein erster Bauteilverbund durch die Leiterplatte 50, den Kühlkörper 90 und den Zusatzhalter 565 gebildet. Ein zweiter Bauteilverbund ist aus dem Halter 560 und der Befestigungsklammer 500, 501 gebildet.

**Fig. 7** zeigt ein drittes Ausführungsbeispiel eines Kraftfahrzeugscheinwerfers 3. Die optischen Elemente, wie die Lichtquellen 110, 120, 130 und die Primäroptiken 210, 220, 230 entsprechen dem ersten Ausführungsbeispiel. Im Unterschied zur Fig. 1 sind die zumindest drei Abstandsmittel 41, 42, 43 durch Abstandsmittel 641, 642 in Form einer Anpassplatte, welche vorzugsweise zwischen dem Halter 60, 560, 660, 760, 860 und dem Zusatzhalter 665 angeordnet ist, ausgebildet und weisen zusätzlich jeweils ein verstellbares Verbindungsmittel 685 auf, vorzugsweise in Form eines Klebstoffs, wobei der Klebstoff den Halter 660 mit der Leiterplatte 50 verbinden, vorzugsweise über einen Zusatzhalter 665 und einen mit diesem fest verbundenen Kühlkörper 90. Die weiteren Ausführungen entsprechen jenen des ersten Ausführungsbeispiels.

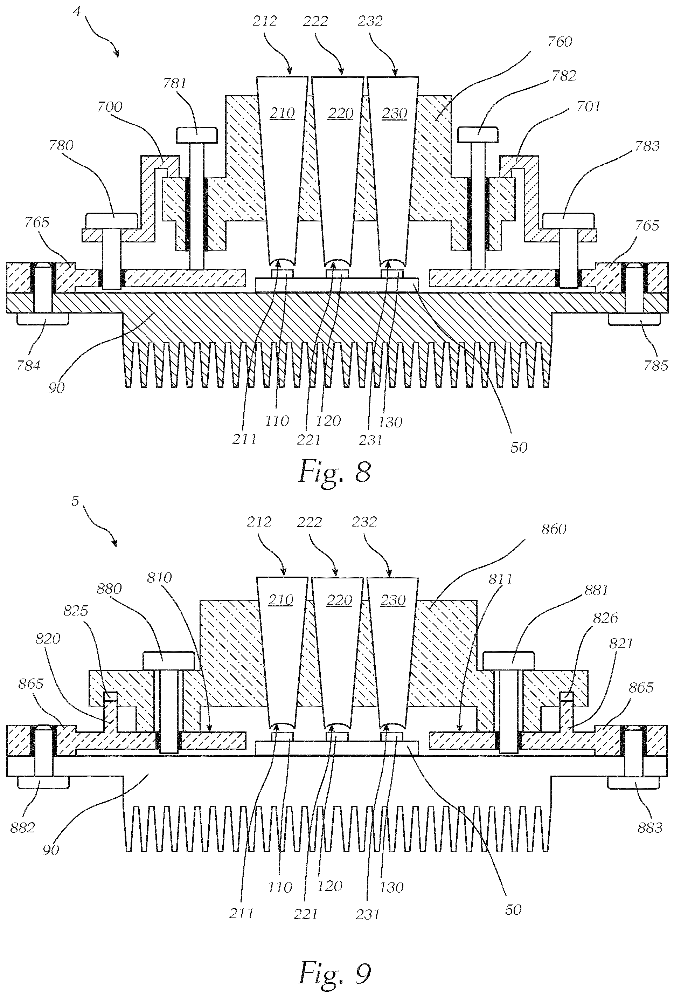

**Fig. 8** zeigt ein viertes Ausführungsbeispiel eines Kraftfahrzeugscheinwerfers 4. Die optischen Elemente, wie die Lichtquellen 110, 120, 130 und die Primäroptiken 210, 220, 230 entsprechen dem ersten Ausführungsbeispiel. Im Unterschied zur Fig. 1 weisen die zumindest drei Abstandsmittel 41, 42, 43 verstellbare Verbindungsmittel 780, 781, 782, 783 auf, vorzugsweise in Form von Schrauben, und elastische Befestigungsklammern 700, 701, wobei die Befestigungsklammer 700, 701 den Halter 760 mit der Leiterplatte 50 verbindet, vorzugsweise über einen Zusatzhalter 565 und einen mit diesem fest verbundenen Kühlkörper 90. Die Verbindungsmittel 780, 783 verbinden die Befestigungsklammern 700, 701 mit dem Zusatzhalter 565 fest und die Verbindungsmittel 781, 782 verbinden die Befestigungsklammern 700, 701 mit dem Halter 760 fest. Die weiteren Ausführungen entsprechen jenen des ersten Ausführungsbeispiels.

In diesem Ausführungsbeispiel ist ein erster Bauteilverbund durch die Leiterplatte 50, den Kühlkörper 90 und den Zusatzhalter 765 gebildet. Ein zweiter Bauteilverbund ist aus dem Halter 760 und der Befestigungsklammer 700, 701 gebildet.

**Fig. 9** zeigt ein fünftes Ausführungsbeispiel eines Kraftfahrzeugscheinwerfers 5. Die optischen Elemente, wie die Lichtquellen 110, 120, 130 und die Primäroptiken 210, 220, 230 entsprechen dem ersten Ausführungsbeispiel. Im Unterschied zur Fig. 1 weisen die zumindest drei Abstandsmittel 41, 42, 43 Verbindungsmittel 880, 881 in Form von Schrauben auf. Die Verbindungsmittel 880, 881 verbinden den Halter 860 mit der Leiterplatte 50 fest, vorzugsweise über einen Zusatzhalter 865 mit einer Auflagefläche 810, 811 und einen mit dem Zusatzhalter 865 fest verbundenen Kühlkörper 90.

In diesem Ausführungsbeispiel ist ein Bauteilverbund durch die Leiterplatte 50, den Kühlkörper 90 und den Zusatzhalter 865 gebildet.

Der Halter 860 oder der Zusatzhalter 865 ist in der Form, insbesondere der Position und Orientierung der Auflagefläche 810, 811 so angepasst, sodass eine optimale Höhe für die Abstandsmittel 41, 42, 43 erreicht wird.

Die Abstandsmittel 41, 42, 43 können einstückig mit dem Halter 860 gebildet sein.

Diese Anpassung kann durch Fräsen der Auflagefläche des Halters auf die richtige Höhe entsprechend der Transformationsfunktion. Deshalb ist in diesem Ausführungsbeispiel ein zusätzliches Abstandsmittel nicht notwendig und das Abstandsmittel ist einstückig mit dem Halter ausgeführt.

Der Zusatzhalter 865 weist ferner einen Zentrierdom 820, 821 auf, welcher mit einer korrespondierenden Zentrieröffnung 825, 826 auf dem Halter 860 zusammenwirkt, um eine gewünschte Ausrichtung zwischen dem Halter 860 und der Leiterplatte 50 zu erreichen.

Zu diesem Zweck können die Zentrieröffnungen 825, 826 entsprechend der Transformationsfunktion an der entsprechenden Stelle gefräst oder gebohrt werden, um eine optimale Justage in der x-y-Ebene zu gewährleisten.

Die weiteren Ausführungen entsprechen jenen des ersten Ausführungsbeispiels.

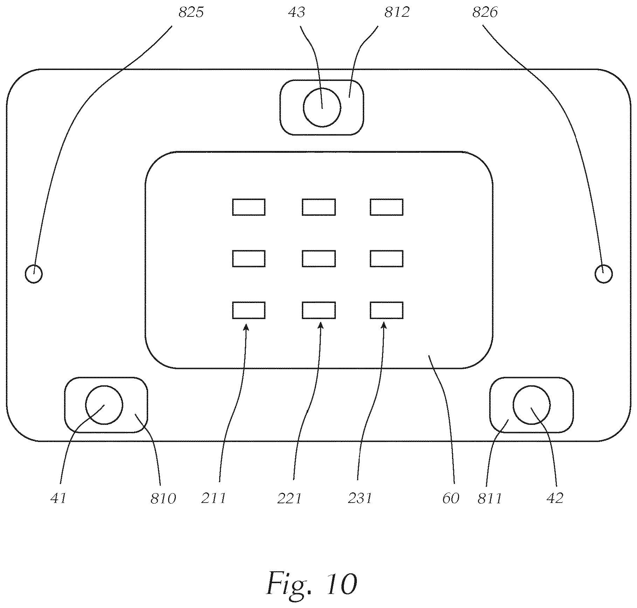

**Fig. 10** zeigt einen Teil der Anordnung der Fig. 9, den Halter 60, in einer Aufsicht. Es sind die Lichteinkoppelflächen 211, 221, 231 und die Auflageflächen 810, 811, 812 zur Anordnung der Abstandsmittel 41, 42, 43 erkennbar.

Die Ausführungsbeispiele der Fig. 1 bis 10 zeigen verschiedene Varianten zur Ausführung der zumindest drei Abstandsmitteln 41, 42, 43 zwischen der Leiterplatte 50 oder einem ersten Bauteilverbund, welcher die Leiterplatte 50 umfasst, und dem Halter 60, 560, 660, 760, 860 oder einem zweiten Bauteilverbund, welcher den Halter 60, 560, 660, 760, 860 umfasst, an den Licht-Referenzpunkten 11, 12, 13 und den Optik-Referenzpunkten 21, 22, 23, die je nach Anforderung unterschiedliche Vorteile hinsichtlich Einfachheit, Hantierbarkeit, Kosten oder Gewicht aufweisen.

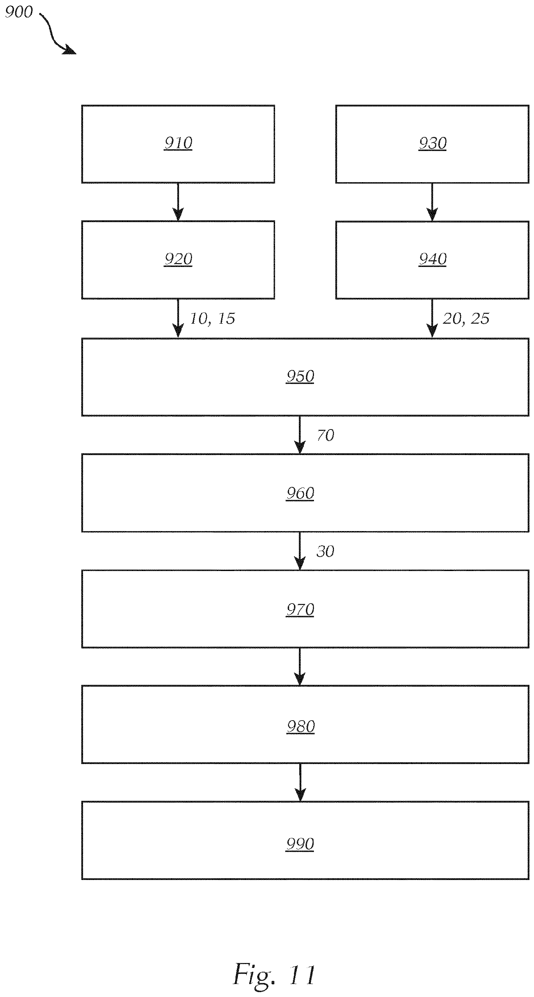

Der Justiervorgang eines Kraftfahrzeugscheinwerfers kann vorzugsweise durch ein Verfahren erfolgen, das in den Fig. 11 bis 13 dargestellt ist. Das Verfahren kann auf den

Kraftfahrzeugscheinwerfer 1, 2, 3, 4, 5 der vorhergehenden Ausführungsbeispiele der Fig. 1 bis 9 angewendet werden, welcher umfasst:
die Lichtquellen 110, 120, 130 aus der Vielzahl von Lichtquellen 100, welche jeweils eine lichtemittierende Fläche 111, 121, 131 aufweisen und auf einer gemeinsamen Leiterplatte 50 angeordnet sind,
und für die Leiterplatte 50 ein Leiterplatten-Referenzpunkt 51 und eine Licht-Referenzebene 10 bezüglich der Leiterplatte 50 bestimmbar ist, wobei die Licht-Referenzebene 10 durch zumindest drei Licht-Referenzpunkte 11, 12, 13 definiert ist, in welcher auch der Leiterplatten-Referenzpunkt 51 gelegen ist, und
Primäroptiken 210, 220, 230 aus der Vielzahl von Primäroptiken 200, welche jeweils eine Lichteinkoppelfläche 211, 221, 231 und jeweils eine Lichtauskoppelfläche 212, 222, 232 aufweisen, und von einem gemeinsamen Halter 60, 560, 660, 760, 860 in Position gehalten sind,
wobei jeder Lichtquelle 110, 120, 130 aus der Vielzahl von Lichtquellen 100 jeweils eine Primäroptik 210, 220, 230 aus der Vielzahl von Primäroptiken 200 zugeordnet ist,
und jede Lichtquelle 110, 120, 130 aus der Vielzahl von Lichtquellen 100 eingerichtet ist, Licht von der jeweiligen lichtemittierenden Fläche 111, 121, 131 zu emittierten und in die jeweilig zugeordnete Lichteinkoppelfläche 211, 221, 231 einzukoppeln,
und für den Halter 60, 560, 660, 760, 860 ein Halter-Referenzpunkt 61 und eine Optik-Referenzebene 20 bezüglich des Halters 60, 560, 660, 760, 860 bestimmbar ist, welche Optik-Referenzebene 20 durch zumindest drei Optik-Referenzpunkte 21, 22, 23 definiert ist, in welcher auch der Halter-Referenzpunkt 61 gelegen ist,
und zumindest drei Abstandsmittel 41, 42, 43 zwischen der Leiterplatte 50 oder einem ersten Bauteil oder einem ersten Bauteilverbund mit der der Leiterplatte 50, und dem Halter 60, 560, 660, 760, 860 oder einem zweiten Bauteil oder einem zweiten Bauteilverbund mit dem Halter 60, 560, 660, 760, 860 jeweils an den Licht-Referenzpunkten 11, 12, 13 und den Optik-Referenzpunkten 21, 22, 23 angeordnet sind,
wobei die Längen und die Orientierungen der zumindest drei Abstandsmittel 41, 42, 43 gemäß einer Transformationsfunktion 70 festgelegt sind, welche die geometrische Transformation zwischen dem Leiterplatten-Referenzpunkt 51 und dem Halter-Referenzpunkt 61 und zwischen einer Licht-Referenzebene 10 und einer Optik-Referenzebene 20 beschreibt,
   wobei aus der räumlichen Position und/oder Orientierung der lichtemittierenden Flächen 111, 121, 131 der Lichtquellen 110, 120, 130 bezüglich der Licht-Referenzebene 10 und dem Leiterplatten-Referenzpunkt 51 die Licht-Ebene 15 gebildet wird, und
   aus der räumlichen Position und/oder Orientierung der Lichteinkoppelflächen 211, 221, 231 der Primäroptiken 210, 220, 230 bezüglich der Optik-Referenzebene 20 und dem Halter-Referenzpunkt 61 die Optik-Ebene 25 gebildet wird, und
   die Licht-Ebene 15 bezüglich der Optik-Ebene 25 so ausgerichtet ist, dass möglichst viel Licht von lichtemittierenden Flächen (111, 121, 131) emittiert und in die jeweilig zugeordneten Lichteinkoppelfläche (211, 221, 231) eingekoppelt wird, und
   ein Abstands-Tripel 30 von Stützstellen-Paaren 31, 32, 33 aus der Transformationsfunktion 70 bestimmt wird, welche Stützstellen-Paare 31, 32, 33 jeweils zwischen den Licht-Referenzpunkten 11, 12, 13 und den Optik-Referenzpunkten 21, 22, 23 verlaufen,
   und die zumindest drei Abstandsmittel 41, 42, 43 hinsichtlich Betrag und Richtung die Stützstellen-Paare 31, 32, 33 des Abstands-Tripels 30 verwirklichen.

Bezugnehmend auf **Fig. 11** werden im Verfahren 900 folgende Schritte ausgeführt:
- Erfassen 910 der räumlichen Position und/oder Orientierung der lichtemittierenden Flächen 111, 121, 131 der Lichtquellen 110, 120, 130 aus der Vielzahl von Lichtquellen 100 bezüglich der Licht-Referenzebene 10 und dem Leiterplatten-Referenzpunkt 51 durch eine Messvorrichtung 7,
- Berechnen 920 der Licht-Ebene 15 aus den räumlichen Positionen und/oder Orientierungen den erfassten lichtemittierenden Flächen 111, 121, 131 der Lichtquellen 110, 120, 130 aus der Vielzahl von Lichtquellen 100 durch eine vor der Messvorrichtung 7 umfasste Rechenvorrichtung 9,
- Erfassen 930 der räumlichen Position und/oder Orientierung der Lichteinkoppelflächen 211, 221, 231 der Primäroptiken 210, 220, 230 aus der Vielzahl von Primäroptiken 200 bezüglich der Optik-Referenzebene 20 und dem Halter-Referenzpunkt 61 durch die Messvorrichtung 7,
- Berechnen 940 der Optik-Ebene 25 aus den erfassten räumlichen Positionen und/oder Orientierungen der Lichteinkoppelflächen 211, 221, 231 der Primäroptiken 210, 220, 230 aus der Vielzahl von Primäroptiken 200 durch die Rechenvorrichtung 9,
- Berechnen 950 einer Transformationsfunktion 70 durch die Rechenvorrichtung 9,
- Bestimmen 960 des Abstands-Tripels 30 von Stützstellen-Paaren 31, 32, 33 aus der Transformationsfunktion 70 durch die Rechenvorrichtung 9,
- Anordnen 970 von zumindest drei Abstandsmitteln 41, 42, 43 mit einer der Transformationsfunktion entsprechenden Höhe zwischen der Leiterplatte 50 und dem Halter 60, 560, 660, 760, 860 an den Licht-Referenzpunkten 11, 12, 13 und den Optik-Referenzpunkten 21, 22, 23,
- Ausrichten 980 des Halters 60, 560, 660, 760, 860 in der Licht- bzw. Optik-Ebene 15, 25 gemäß der jeweiligen Referenzpunkte 11, 12, 13, 21, 22, 23,
- Fixieren 990 des Halters 60, 560, 660, 760, 860 mittels eines Verbindungsmittels 80, 81, 580, 581, 685, 686, 780, 783, 880, 881.

Die Verfahrensschritte 910 und 920 können, so wie in der Fig. 11 dargestellt, parallel zur den Verfahrensschritten 930 und 940 durchgeführt werden, aber auch nach oder vor letzteren.

Die Berechnungen werden in einer Rechenvorrichtung 9 durchgeführt, welche beispielsweise innerhalb der Messvorrichtung 7 gelegen ist.

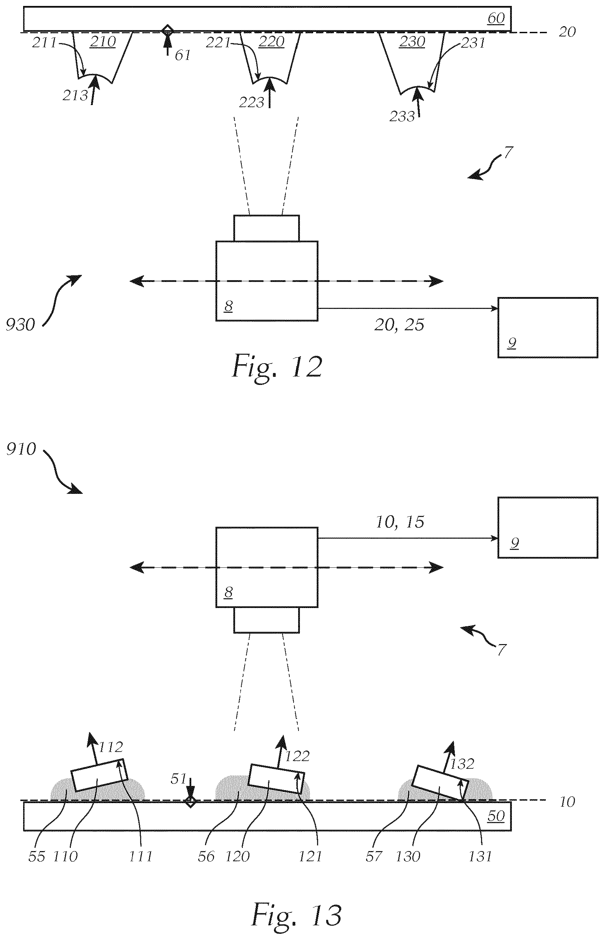

**Fig. 12** illustriert den Verfahrensschritt 930. Die Messvorrichtung 7 mit einem Sensor 8, beispielsweise eine stereoskopische Kamera oder eine Laser-Triangulationsvorrichtung, verfügt über einen Koordinatentisch, auf welchem das zu vermessende Objekt angeordnet wird. Die Messvorrichtung 7 ist eingerichtet, den Koordinatentisch für Verschiebebewegungen und den Sensor 8 zum Erfassen des Objekts entsprechend anzusteuern, und Positionsdaten aufgrund der Verschiebebewegungen des Koordinatentisches zu erfassen sowie Sensordaten des Objekts aus dem Sensor 8 abzurufen. Ferner können die erfassen Positionsdaten und Sensordaten zur weiteren Verwendung bearbeitet und beispielsweise in einem Speicher der Messvorrichtung 7 abgespeichert werden.

Im Verfahrensschritt 930 ist das zu vermessende Objekt ein Optik-Element des Kraftfahrzeugscheinwerfers 1 der Fig. 1, umfassend Primäroptiken 210, 220, 230 und den Halter 60.

Während der Messung wird der Sensor 8 über die Primäroptiken 210, 220, 230 bzw. den Halter 60 bewegt, wobei die Bewegung des Sensors 8 in der Fig. 12 durch die Pfeile angedeutet ist.

Durch die Messung wird die räumliche Position und/oder Orientierung der Lichteinkoppelflächen 211, 221, 231 der Primäroptiken 210, 220, 230 aus der Vielzahl von Primäroptiken 200 bezüglich der Optik-Referenzebene 20 und dem Halter-Referenzpunkt 61 durch eine geometrische Vermessung bzw. Auswertung von Sensordaten aus der Stereo-Kamera erfasst. Somit wird auch der Halter-Referenzpunkt 61 durch die Stereo-Kamera 8 erfasst, während die Lage der Halter-Referenzebene 20 durch die Messanordnung 7 bestimmt ist. Die ermittelten Daten 20, 25 werden an die Rechenvorrichtung 9 übergeben.

**Fig. 13** illustriert den Verfahrensschritt 910, in welchem die Messvorrichtung 7 mit dem Sensor 8 gemäß der vorhergehenden Beschreibung verwendet werden kann.

Im Verfahrensschritt 910 ist das zu vermessende Objekt ein Licht-Element des Kraftfahrzeugscheinwerfers 1 der Fig. 1, umfassend Lichtquellen 110, 120, 130 und die Leiterplatte 50.

Während der Messung wird der Sensor 8 über die Lichtquellen 110, 120, 130 und die Leiterplatte 50 bewegt, wobei die Bewegung des Sensors 8 in der Fig. 13 durch die Pfeile angedeutet ist.

Durch die Messung wird die räumliche Position und/oder Orientierung der lichtemittierenden Flächen 111, 121, 131 der Lichtquellen 110, 120, 130 aus der Vielzahl von Lichtquellen 100 bezüglich der Licht-Referenzebene 10 und dem Leiterplatten-Referenzpunkt 51 durch eine geometrische Vermessung bzw. Auswertung von Sensordaten aus der Stereo-Kamera 8 erfasst, während die Lage der Licht-Referenzebene 10 durch die Messanordnung 7 bestimmt ist. Die ermittelten Daten 10, 15 werden an die von der Messanordnung 7 umfasste Rechenvorrichtung 9 übergeben.

Durch das erfindungsgemäße Verfahren wird auf einfache und kostengünstige Weise erreicht, dass die Lichtquellen und Primäroptiken besser zueinander ausgerichtet werden und somit die Effizienz der Einkopplung von emittiertem Licht in die Primäroptik verbessert wird.

Eine bevorzugte Weiterentwicklung des Verfahrens besteht darin, dass zwischen der lichtemittierenden Fläche 111, 121, 131 der jeweiligen Lichtquelle 110, 120, 130 aus der Vielzahl von Lichtquellen 100 und der Lichteinkoppelfläche 211, 221, 231 der jeweils zugeordneten Primäroptik 210, 220, 230 aus der Vielzahl von Primäroptiken 200 jeweils ein Abstandsmaß 310, 320, 330 normal zu der Licht-Referenzebene 10 und der Optik-Referenzebene 20, welche zueinander parallel verlaufen, durch die Rechenvorrichtung 9 ermittelt wird.

Es ist vorteilhaft, wenn aus den Abstandsmaßen 310, 320, 330 ein Ebenen-Abstand 300 ermittelt wird, welcher bei der Berechnung der Transformationsfunktion 70 verwendet wird, um den Abstand zwischen der Leiterplatte 50 und dem Halter 60, 560, 660, 760, 860 im Leiterplatten-Referenzpunkt 51 der Leiterplatte 50 oder im Halter-Referenzpunkt 61 des Halters 60 zu bestimmen, wobei vorzugsweise der Ebenen-Abstand 300 so bestimmt wird, sodass ein vorbestimmter Minimalabstand für alle Abstandsmaße 310, 320, 330 eingestellt ist.

Die Lichtquelle 110, 120, 130 aus der Vielzahl von Lichtquellen 100 ist eingerichtet, Licht von der lichtemittierende Fläche 111, 121, 131 zu emittieren. Beispielsweise geschieht die Emission primär in die Richtung eines Abstrahlvektors 112, 122, 132. Das Licht wird in die Lichteinkoppelfläche 211, 221, 231 der jeweils zugeordneten Primäroptik 210, 220, 230 aus der Vielzahl von Primäroptiken 200 eingekoppelt, beispielsweise von der Richtung eines Einkoppelvektors 213, 223, 233. Für jedes Paar von Lichtquelle 110, 120, 130 und zugeordneter Primäroptik 210, 220, 230 ergibt sich somit ein jeweiliges Orientierungsmaß, welches der Einkopplung des jeweils emittierten Lichts und dem jeweils eingekoppelten Lichts entspricht und beispielsweise durch die Rechenvorrichtung 9 ermittelt wird, und welches bevorzugt aus der räumlichen Winkeldifferenz zwischen dem Abstrahlvektor 112, 122, 132 und dem Einkoppelvektor 213, 223, 233 bestimmt wird.

Die Erfindung kann vorteilhaft weiterentwickelt werden, wenn bei der Berechnung der Transformationsfunktion 70 aus dem jeweiligen Orientierungsmaß eine Ebenen-Verschiebung 301 zwischen der Licht-Referenzebene 10 und der Optik-Referenzebene 20 bezüglich des Leiterplatten-Referenzpunktes 51 und des Halter-Referenzpunktes 61 und/oder eine Ebenen-Neigung 16, 26 um zumindest eine Achse der Licht-Referenzebene 10 und/oder der Optik-Referenzebene 20 ermittelt wird. Vorzugsweise wird bei der Berechnung der Transformationsfunktion 70 die Ebenen-Verschiebung 301 so bestimmt, sodass die jeweiligen Orientierungsmaße minimiert werden, und bevorzugt die jeweiligen Orientierungsmaße von zumindest 75% aller Paare von Lichtquelle 110, 120, 130 und zugeordneter Primäroptik 210, 220, 230 minimiert werden.

Unter einem Paar von Lichtquelle und Primäroptik wird eine Lichtquelle verstanden, die einer Primäroptik zugeordnet ist und bei welcher von der Lichtquelle emittiertes Licht in die Lichteinkoppelfläche der zugeordneten Primäroptik eingekoppelt wird. Die Primäroptik entspricht beispielsweise einem längs erstrecktem Lichtleiter, welcher einen über die Länge sich vergrößerndem Querschnitt aufweist.

Eine Primäroptik in einem Scheinwerfer weist beispielsweise eine Vielzahl an Lichtleitern auf und auf der Leiterplatte im Scheinwerfer ist beispielsweise eine Vielzahl an Leuchtdioden angeordnet.

Das Ausführungsbeispiel aus der Fig. 1 zeigt Lichtauskoppelflächen 212, 222, 232 der Primäroptiken 210, 220, 230 aus der Vielzahl von Primäroptiken 200 des Kraftfahrzeugscheinwerfers 1, welche beispielsweise in der Petzval-Fläche einer nicht gezeigten Projektionsoptik gelegen sein können, welche das Licht in einer Einbaulage in einem Fahrzeug als Lichtbild vor das Fahrzeug projiziert.

Beispielsweise kann die Rechenvorrichtung 9 (siehe Fig. 12 und 13) die Licht-Ebene 15 bestimmen, in welcher die Positionen der lichtemittierenden Flächen 111, 121, 131 der Lichtquellen 110, 120, 130 approximiert in der Licht-Ebene 15 gelegen sind, und/oder die Optik-Ebene 25 gebildet wird, in welcher die Positionen der Lichteinkoppelflächen 211, 221, 231 der Primäroptiken 210, 220, 230 approximiert in der Optik-Ebene 25 gelegen sind, vorzugsweise durch Bestimmung jeweils einer Best-Fit-Ebene.

Es ist besonders günstig, wenn die Richtung der Abstandsmittel 41, 42, 43 normal zur Optik-Referenzebene 20 verläuft.

Durch die Weiterbildungen des erfindungsgemäßen Verfahrens werden auch die Vorteile der erfindungsgemäßen Vorrichtung erreicht.

Es ist klar, dass die vorher genannten Merkmale der Weiterbildungen und Ausführungsformen der Erfindung untereinander kombiniert werden können, um weitere einzelne oder kombinatorische Vorteile zu erzielen.

### Liste der Bezugszeichen:

- 1-5: Kraftfahrzeugscheinwerfer, Lichtmodul
- 7: Messvorrichtung
- 8: Sensor
- 9: Rechenvorrichtung
- 10: Licht-Referenzebene
- 11, 12, 13: Licht-Referenzpunkt
- 15: Licht-Ebene
- 16: Licht-Winkel
- 20: Optik-Referenzebene
- 21, 22, 23: Optik-Referenzpunkt
- 25: Optik-Ebene
- 26: Optik-Winkel
- 30: Abstands-Tripel
- 31, 32, 33: Stützstellen-Paar
- 41, 42, 43, 541, 542, 641, 642, 741, 742: Abstandsmittel
- 45, 46, 47, 810, 811, 812: Auflagefläche
- 50: Leiterplatte
- 51: Leiterplatten-Referenzpunkt
- 55, 56, 57: Lötstelle
- 60, 560, 660, 760, 860: Halter
- 61: Halter-Referenzpunkt
- 65, 565, 665, 765, 865: Zusatzhalter
- 70: Transformationsfunktion
- 80-83, 580-583, 680, 681, 685, 686, 880-885: Verbindungsmittel
- 90: Kühlkörper
- 100: Vielzahl von Lichtquellen
- 110, 120, 130: Lichtquelle
- 111, 121, 131: lichtemittierende Fläche
- 112, 122, 132: Abstrahlvektor
- 200: Vielzahl von Primäroptiken
- 210, 220, 230: Primäroptik
- 211, 221, 231: Lichteinkoppelfläche
- 212, 222, 232: Lichtauskoppelfläche
- 213, 223, 233: Einkoppelvektor
- 300: Ebenen-Abstand
- 301: Ebenen-Verschiebung
- 310, 320, 330, 311, 321, 331: Koppelabstand
- 400: Leiterplatten-Orientierung
- 401: Halter-Orientierung
- 500, 501, 700, 701: Befestigungsklammer
- 820, 821: Zentrierdom
- 825, 826: Zentrieröffnung
- 900-990: Verfahrensschritte

## Patentansprüche

1. Verfahren (900) zur Justierung einer Vielzahl von Lichtquellen (110, 120, 130) und einer Vielzahl von Primäroptiken (210, 220, 230) eines Kraftfahrzeugscheinwerfers (1, 2, 3, 4, 5) zueinander, **dadurch gekennzeichnet, dass**
die Lichtquellen (110, 120, 130) jeweils eine lichtemittierende Fläche (111, 121, 131) aufweisen und auf einer gemeinsamen Leiterplatte (50) angeordnet sind,
und für die Leiterplatte (50) ein Leiterplatten-Referenzpunkt (51) und eine Licht-Referenzebene (10) bezüglich der Leiterplatte (50) bestimmbar ist, wobei die Licht-Referenzebene (10) durch zumindest drei Licht-Referenzpunkte (11, 12, 13) definiert ist, und vorzugsweise der Leiterplatten-Referenzpunkt (51) in der Licht-Referenzebene (10) gelegen ist, und
die Primäroptiken (210, 220, 230) jeweils eine Lichteinkoppelfläche (211, 221, 231) und jeweils eine Lichtauskoppelfläche (212, 222, 232) aufweisen, und von einem gemeinsamen Halter (60, 560, 660, 760, 860) in Position gehalten sind,
wobei jeder Lichtquelle (110, 120, 130) jeweils eine Primäroptik (210, 220, 230) zugeordnet ist,
und jede Lichtquelle (110, 120, 130) eingerichtet ist, Licht von der jeweiligen lichtemittierenden Fläche (111, 121, 131) zu emittierten und in die jeweilig zugeordnete Lichteinkoppelfläche (211, 221, 231) einzukoppeln,
und für den Halter (60, 560, 660, 760, 860) ein Halter-Referenzpunkt (61) und eine Optik-Referenzebene (20) bezüglich des Halters (60, 560, 660, 760, 860) bestimmbar ist, welche Optik-Referenzebene (20) durch zumindest drei Optik-Referenzpunkte (21, 22, 23) definiert ist und in welcher vorzugsweise auch der Halter-Referenzpunkt (61) gelegen ist,
und zumindest drei Abstandsmittel (41, 42, 43) zwischen der Leiterplatte (50), oder einem Bauteil oder einem Bauteilverbund, mit welchem die Leiterplatte mechanisch fest verbunden ist, und dem Halter (60, 560, 660, 760, 860) jeweils an den Licht-Referenzpunkten (11, 12, 13) und den Optik-Referenzpunkten (21, 22, 23) angeordnet sind,
wobei die Längen und die Orientierungen der zumindest drei Abstandsmittel (41, 42, 43) gemäß einer Transformationsfunktion (70) festgelegt sind, welche die geometrische Transformation zwischen dem Leiterplatten-Referenzpunkt (51) und dem Halter-Referenzpunkt (61) und zwischen einer Licht-Referenzebene (10) und einer Optik-Referenzebene (20) beschreibt,
wobei aus der räumlichen Position und/oder Orientierung der lichtemittierenden Flächen (111, 121, 131) der Lichtquellen (110, 120, 130) bezüglich der Licht-Referenzebene (10) und dem Leiterplatten-Referenzpunkt (51) eine Licht-Ebene (15) gebildet wird, und
aus der räumlichen Position und/oder Orientierung der Lichteinkoppelflächen (211, 221, 231) der Primäroptiken (210, 220, 230) bezüglich der Optik-Referenzebene (20) und dem Halter-Referenzpunkt (61) eine Optik-Ebene (25) gebildet wird, und
die Licht-Ebene (15) bezüglich der Optik-Ebene (25) so ausgerichtet ist, dass möglichst viel Licht von lichtemittierenden Flächen (111, 121, 131) emittiert und in die jeweilig zugeordneten Lichteinkoppelfläche (211, 221, 231) eingekoppelt wird, und
ein Abstands-Tripel (30) von Stützstellen-Paaren (31, 32, 33) aus der Transformationsfunktion (70) bestimmt wird, welche Stützstellen-Paare (31, 32, 33) jeweils zwischen den Licht-Referenzpunkten (11, 12, 13) und den Optik-Referenzpunkten (21, 22, 23) verlaufen,
und die zumindest drei Abstandsmittel (41, 42, 43) hinsichtlich Betrag und Richtung die Stützstellen-Paare (31, 32, 33) des Abstands-Tripels (30) verwirklichen.
wobei im Verfahren (900) folgende Schritte ausgeführt werden:
- Erfassen (910) der räumlichen Position und/oder Orientierung der lichtemittierenden Flächen (111, 121, 131) der Lichtquellen (110, 120, 130) bezüglich der Licht-Referenzebene (10) und dem Leiterplatten-Referenzpunkt (51) durch eine Messvorrichtung (7),
- Berechnen (920) der Licht-Ebene (15) aus den räumlichen Positionen und/oder Orientierungen den erfassten lichtemittierenden Flächen (111, 121, 131) der Lichtquellen (110, 120, 130) durch eine von der Messvorrichtung (7) umfasste Rechenvorrichtung (9),
- Erfassen (930) der räumlichen Position und/oder Orientierung der Lichteinkoppelflächen (211, 221, 231) der Primäroptiken (210, 220, 230) bezüglich der Optik-Referenzebene (20) und dem Halter-Referenzpunkt (61) durch die Messvorrichtung (7),
- Berechnen (940) der Optik-Ebene (25) aus den erfassten räumlichen Positionen und/oder Orientierungen der Lichteinkoppelflächen (211, 221, 231) der Primäroptiken (210, 220, 230) durch die Rechenvorrichtung (9),
- Berechnen (950) der Transformationsfunktion (70) durch die Rechenvorrichtung (9),
- Bestimmen (960) eines Abstands-Tripels (30) von Stützstellen-Paaren (31, 32, 33) aus der Transformationsfunktion (70) durch die Rechenvorrichtung (9),
- Anordnen (970) von zumindest drei Abstandsmitteln (41, 42, 43) zwischen der Leiterplatte (50), oder einem Bauteil oder einem Bauteilverbund, mit welchem die Leiterplatte mechanisch fest verbunden ist, und dem Halter (60, 560, 660, 760, 860) an den Licht-Referenzpunkten (11, 12, 13) und den Optik-Referenzpunkten (21, 22, 23)
- Ausrichten (980) des Halters (60, 560, 660, 760, 860) in der Licht- bzw. Optik-Ebene (15, 25) gemäß der jeweiligen Referenzpunkte (11, 12, 13, 21, 22, 23),
- Fixieren (990) des Halters (60, 560, 660, 760, 860) durch zumindest ein Verbindungsmittel (80, 81, 580, 581, 685, 686, 780, 783, 880, 881).

2. Verfahren nach Anspruch 1, **dadurch gekennzeichnet, dass** zwischen der lichtemittierenden Fläche (111, 121, 131) der jeweiligen Lichtquelle (110, 120, 130) und der Lichteinkoppelfläche (211, 221, 231) der jeweils zugeordneten Primäroptik (210, 220, 230) jeweils ein Abstandsmaß (310, 320, 330) normal zu der Licht-Referenzebene (10) und der Optik-Referenzebene (20), welche im nicht-justierten Zustand zueinander parallel verlaufen, durch die Rechenvorrichtung (9) ermittelt wird.

3. Verfahren nach Anspruch 2, **dadurch gekennzeichnet, dass** aus den Abstandsmaßen (310, 320, 330) durch die Transformationsfunktion (70) ein Ebenen-Abstand (300) ermittelt wird, welcher den Abstand zwischen der Leiterplatte (50) und dem Halter (60, 560, 660, 760, 860) im Leiterplatten-Referenzpunkt (51) der Leiterplatte (50) oder im Halter-Referenzpunkt (61) des Halters (60) beschreibt, wobei vorzugsweise der Ebenen-Abstand (300) so bestimmt wird, sodass ein vorbestimmter Minimalabstand für alle Abstandsmaße (310, 320, 330) eingestellt ist.

4. Verfahren nach einem der Ansprüche 1 bis 3, **dadurch gekennzeichnet, dass** die jeweilige Lichtquelle (110, 120, 130) eingerichtet ist, Licht von der lichtemittierende Fläche (111, 121, 131) zu emittieren, bevorzugt in die Richtung eines Abstrahlvektors (112, 122, 132), und in die Lichteinkoppelfläche (211, 221, 231) der jeweils zugeordneten Primäroptik (210, 220, 230) einzukoppeln, bevorzugt aus der Richtung eines Einkoppelvektors (213, 223, 233), und für jedes Paar von Lichtquelle (110, 120, 130) und zugeordneter Primäroptik (210, 220, 230) ein jeweiliges Orientierungsmaß durch die Rechenvorrichtung (9) ermittelt wird, welches der Einkopplung des jeweils emittierten Lichts und dem jeweils eingekoppelten Lichts entspricht, und welcher bevorzugt aus der räumlichen Winkeldifferenz zwischen dem Abstrahlvektor (112, 122, 132) und dem Einkoppelvektor (213, 223, 233) ermittelt wird.

5. Verfahren nach Anspruch 4, **dadurch gekennzeichnet, dass** eine Ebenen-Verschiebung (301) zwischen der Licht-Referenzebene (10) und der Optik-Referenzebene (20) bezüglich des Leiterplatten-Referenzpunktes (51) und des Halter-Referenzpunktes (61) und/oder eine Ebenen-Neigung (16, 26) um zumindest eine Achse der Licht-Referenzebene (10) und/oder der Optik-Referenzebene (20) erreicht wird, sodass die jeweiligen Orientierungsmaße minimiert werden, und bevorzugt die jeweiligen Orientierungsmaße von zumindest 75% aller Paare von Lichtquelle (110, 120, 130) und zugeordneter Primäroptik (210, 220, 230) minimiert werden.

6. Verfahren nach einem der Ansprüche 1 bis 5, **dadurch gekennzeichnet, dass** die Positionen der lichtemittierenden Flächen (111, 121, 131) der Lichtquellen (110, 120, 130) approximiert in der Licht-Ebene (15) gelegen sind, und/oder die Positionen der Lichteinkoppelflächen (211, 221, 231) der Primäroptiken (210, 220, 230) approximiert in der Optik-Ebene (25) gelegen sind, wobei vorzugsweise die Approximation der Ebenen (15, 25) durch Bestimmung jeweils einer Best-Fit-Ebene erfolgt.

## Claims

1. Method (900) for aligning a plurality of light sources (110, 120, 130) and a plurality of primary optical elements (210, 220, 230) of a motor vehicle headlight (1, 2, 3, 4, 5) relative to one another, **characterized in that**
the light sources (110, 120, 130) each have a light-emitting surface (111, 121, 131) and are arranged on a common printed circuit board (50),
and a printed circuit board reference point (51) and a light reference plane (10) can be determined for the printed circuit board (50) with respect to the printed circuit board (50), wherein the light reference plane (10) is defined by at least three light reference points (11, 12, 13), and preferably the PCB reference point (51) is located in the light reference plane (10), and
the primary optics (210, 220, 230) each having a light-injection surface (211, 221, 231) and a light-extraction surface (212, 222, 232), and held in position by a common holder (60, 560, 660, 760, 860),
wherein each light source (110, 120, 130) is assigned a respective primary optical element (210, 220, 230),
and each light source (110, 120, 130) is configured to emit light from the respective light-emitting surface (111, 121, 131) and to couple it into the respectively associated light-coupling surface (211, 221, 231),
and, for the holder (60, 560, 660, 760, 860), a holder reference point (61) and an optical reference plane (20) can be determined with respect to the holder (60, 560, 660, 760, 860), which optical reference plane (20) is defined by at least three optical reference points (21, 22, 23) and in which the holder reference point (61) is preferably also located,
and at least three spacing means (41, 42, 43) between the printed circuit board (50), or a component or a component assembly to which the printed circuit board is mechanically fixed, and the holder (60, 560, 660, 760, 860) are each arranged at the light reference points (11, 12, 13) and the optical reference points (21, 22, 23),
wherein the lengths and orientations of the at least three spacer means (41, 42, 43) are determined according to a transformation function (70) that describes the geometric transformation between the PCB reference point (51) and the holder reference point (61) and between a light reference plane (10) and an optical reference plane (20),
wherein a light plane (15) is formed based on the spatial position and/or orientation of the light-emitting surfaces (111, 121, 131) of the light sources (110, 120, 130) with respect to the light reference plane (10) and the circuit board reference point (51) form a light plane (15), and
from the spatial position and/or orientation of the light-coupling surfaces (211, 221, 231) of the primary optics (210, 220, 230) with respect to the optics reference plane (20) and the holder reference point (61) form an optics plane (25), and
the light plane (15) is aligned with respect to the optics plane (25) such that as much light as possible is emitted from light-emitting surfaces (111, 121, 131) is emitted and coupled into the respective associated light-coupling surface (211, 221, 231), and
a distance triplet (30) of support point pairs (31, 32, 33) is determined from the transformation function (70), which support point pairs (31, 32, 33) extend respectively between the light reference points (11, 12, 13) and the optical reference points (21, 22, 23),
and the at least three distance vectors (41, 42, 43) realize the support point pairs (31, 32, 33) of the distance triplet (30) in terms of magnitude and direction,
wherein the method (900) comprises the following steps:
- Detecting (910) the spatial position and/or orientation of the light-emitting surfaces (111, 121, 131) of the light sources (110, 120, 130) relative to the light reference plane (10) and the PCB reference point (51) using a measuring device (7),
- Calculating (920) the light plane (15) from the spatial positions and/or orientations of the detected light-emitting surfaces (111, 121, 131) of the light sources (110, 120, 130) by a computing device (9) included in the measuring device (7),
- Detecting (930) the spatial position and/or orientation of the light-coupling surfaces (211, 221, 231) of the primary optics (210, 220, 230) relative to the optical reference plane (20) and the holder reference point (61) by the measuring device (7),
- Calculating (940) the optical plane (25) from the detected spatial positions and/or orientations of the light-coupling surfaces (211, 221, 231) of the primary optics (210, 220, 230) by the computing device (9),
- Calculating (950) the transformation function (70) by the computing device (9),
- Determining (960) a distance triplet (30) of support point pairs (31, 32, 33) from the transformation function (70) by the computing device (9),
- Arranging (970) at least three spacer elements (41, 42, 43) between the printed circuit board (50), or a component or a component assembly to which the printed circuit board is mechanically fixed, and the holder (60, 560, 660, 760, 860) at the light reference points (11, 12, 13) and the optical reference points (21, 22, 23)
- Aligning (980) the holder (60, 560, 660, 760, 860) in the light or optical plane (15, 25) according to the respective reference points (11, 12, 13, 21, 22, 23),
- Securing (990) the holder (60, 560, 660, 760, 860) by means of at least one connecting element (80, 81, 580, 581, 685, 686, 780, 783, 880, 881).

2. Method according to claim 1, **characterized in that** between the light-emitting surface (111, 121, 131) of the respective light source (110, 120, 130) and the light-coupling surface (211, 221, 231) of the respectively associated primary optics (210, 220, 230), a distance measurement (310, 320, 330) is determined by the computing device (9) perpendicular to the light reference plane (10) and the optics reference plane (20), which run parallel to each other in the unadjusted state.

3. Method according to claim 2, **characterized in that** a plane distance (300) is determined from the distance measurements (310, 320, 330) using the transformation function (70), which describes the distance between the printed circuit board (50) and the holder (60, 560, 660, 760, 860) at the PCB reference point (51) of the printed circuit board (50) or at the holder reference point (61) of the holder (60), wherein the plane distance (300) is preferably determined such that a predetermined minimum distance is set for all distance measurements (310, 320, 330) is set.

4. Method according to any one of claims 1 to 3, **characterized in that** the respective light source (110, 120, 130) is configured to emit light from the light-emitting surface (111, 121, 131), preferably in the direction of a radiation vector (112, 122, 132), and to couple into the light-coupling surface (211, 221, 231) of the respectively associated primary optics (210, 220, 230), preferably from the direction of a coupling vector (213, 223, 233), and for each pair of light source (110, 120, 130) and associated primary optics (210, 220, 230), a respective orientation measure is determined by the computing device (9), which corresponds to the coupling of the respective emitted light and the respective coupled light, and which is preferably determined from the spatial angle difference between the emission vector (112, 122, 132) and the coupling vector (213, 223, 233).

5. Method according to claim 4, **characterized in that** a plane shift (301) between the light reference plane (10) and the optical reference plane (20) with respect to the PCB reference point (51) and the holder reference point (61) and/or a plane tilt (16, 26) about at least one axis of the light reference plane (10) and/or the optical reference plane (20) is achieved, so that the respective orientation dimensions are minimized, and preferably the respective orientation dimensions of at least 75% of all pairs of light sources (110, 120, 130) and associated primary optics (210, 220, 230) are minimized.

6. Method according to any one of claims 1 to 5, **characterized in that** the positions of the light-emitting surfaces (111, 121, 131) of the light sources (110, 120, 130) are approximately located in the light plane (15), and/or the positions of the light-coupling surfaces (211, 221, 231) of the primary optics (210, 220, 230) are approximately located in the optical plane (25), wherein the approximation of the planes (15, 25) is preferably performed by determining a best-fit plane in each case.

## Revendications

1. Procédé (900) d'alignement d'une pluralité de sources lumineuses (110, 120, 130) et d'une pluralité d'optiques primaires (210, 220, 230) d'un projecteur de véhicule automobile (1, 2, 3, 4, 5) les unes par rapport aux autres, **caractérisé en ce que**
les sources lumineuses (110, 120, 130) comportent chacune une surface émettrice de lumière (111, 121, 131) et sont disposées sur une carte de circuit imprimé commune (50),
et pour laquelle un point de référence de la carte de circuit imprimé (51) et un plan de référence lumineux (10) peuvent être déterminés par rapport à la carte de circuit imprimé (50), le plan de référence lumineux (10) étant défini par au moins trois points de référence lumineux (11, 12, 13), et de préférence le point de référence de la carte de circuit imprimé (51) est situé dans le plan de référence lumineux (10), et
les optiques primaires (210, 220, 230) comportent chacune une surface d'entrée de lumière (211, 221, 231) et chacune une surface de sortie de lumière (212, 222, 232), et sont maintenues en position par un support commun (60, 560, 660, 760, 860),
chaque source lumineuse (110, 120, 130) étant associée à une optique primaire (210, 220, 230),
et chaque source lumineuse (110, 120, 130) est agencée pour émettre de la lumière à partir de la surface émettrice de lumière respective (111, 121, 131) et pour la coupler dans la surface de couplage de lumière respectivement associée (211, 221, 231),
et pour le support (60, 560, 660, 760, 860), un point de référence du support (61) et un plan de référence optique (20) peuvent être déterminés par rapport au support (60, 560, 660, 760, 860), lequel plan de référence optique (20) est défini par au moins trois points de référence optiques (21, 22, 23) et dans lequel se trouve de préférence également le point de référence du support (61),
et au moins trois moyens de mesure de distance (41, 42, 43) entre la carte de circuit imprimé (50), ou un composant ou un ensemble de composants auquel la carte de circuit imprimé est reliée de manière mécanique, et le support (60, 560, 660, 760, 860) sont disposés respectivement au niveau des points de référence lumineux (11, 12, 13) et des points de référence optiques (21, 22, 23),
les longueurs et les orientations des au moins trois moyens d'espacement (41, 42, 43) sont déterminées selon une fonction de transformation (70) qui décrit la transformation géométrique entre le point de référence de la carte de circuit imprimé (51) et le point de référence du support (61) et entre un plan de référence lumineux (10) et un plan de référence optique (20),
dans lequel, à partir de la position spatiale et/ou de l'orientation des surfaces émettrices de lumière (111, 121, 131) des sources lumineuses (110, 120, 130) par rapport au plan de référence lumineux (10) et au point de référence de la carte de circuit imprimé (51) permet de former un plan lumineux (15), et
à partir de la position spatiale et/ou de l'orientation des surfaces de couplage de lumière (211, 221, 231) des optiques primaires (210, 220, 230) par rapport au plan de référence optique (20) et au point de référence du support (61) forme un plan optique (25), et
le plan lumineux (15) est aligné par rapport au plan optique (25) de telle sorte qu'un maximum de lumière soit émis par les surfaces émettrices de lumière (111, 121, 131) soit émise et couplée dans la surface de couplage de lumière (211, 221, 231) respectivement associée, et
un triplet de distances (30) de paires de points d'appui (31, 32, 33) est déterminé à partir de la fonction de transformation (70), lesquels paires de points d'appui (31, 32, 33) s'étendent respectivement entre les points de référence lumineux (11, 12, 13) et les points de référence optiques (21, 22, 23),
et les au moins trois moyennes de distance (41, 42, 43) réalisent, en termes de valeur et de direction, les paires de points d'appui (31, 32, 33) du triplet de distances (30),
le procédé (900) comprenant les étapes suivantes :
- détection (910) de la position spatiale et/ou de l'orientation des surfaces émettrices de lumière (111, 121, 131) des sources lumineuses (110, 120, 130) par rapport au plan de référence lumineux (10) et au point de référence de la carte de circuit imprimé (51) à l'aide d'un dispositif de mesure (7),
- calcul (920) du plan lumineux (15) à partir des positions spatiales et/ou des orientations des surfaces émettrices de lumière (111, 121, 131) détectées des sources lumineuses (110, 120, 130) par un dispositif de calcul (9) compris dans le dispositif de mesure (7),
- détection (930) de la position spatiale et/ou de l'orientation des surfaces d'entrée de lumière (211, 221, 231) des optiques primaires (210, 220, 230) par rapport au plan de référence optique (20) et au point de référence du support (61) par le dispositif de mesure (7),
- calcul (940) du plan optique (25) à partir des positions spatiales et/ou des orientations détectées des surfaces d'entrée de lumière (211, 221, 231) des optiques primaires (210, 220, 230) par le dispositif de calcul (9),
- calcul (950) de la fonction de transformation (70) par le dispositif de calcul (9),
- détermination (960) d'un triplet de distances (30) de paires de points d'appui (31, 32, 33) à partir de la fonction de transformation (70) par le dispositif de calcul (9),
- disposition (970) d'au moins trois moyens d'espacement (41, 42, 43) entre la carte de circuit imprimé (50), ou un composant ou un ensemble de composants auquel la carte de circuit imprimé est solidement reliée mécaniquement, et le support (60, 560, 660, 760, 860) au niveau des points de référence lumineux (11, 12, 13) et des points de référence optiques (21, 22, 23)
- alignement (980) du support (60, 560, 660, 760, 860) dans le plan optique (15, 25) conformément aux points de référence respectifs (11, 12, 13, 21, 22, 23),
- fixation (990) du support (60, 560, 660, 760, 860) à l'aide d'au moins un moyen de liaison (80, 81, 580, 581, 685, 686, 780, 783, 880, 881).

2. Procédé selon la revendication 1, **caractérisé en ce qu'**entre la surface émettrice de lumière (111, 121, 131) de la source lumineuse respective (110, 120, 130) et la surface de couplage de lumière (211, 221, 231) de l'optique primaire respectivement associée (210, 220, 230) est déterminée par le dispositif de calcul (9).

3. Procédé selon la revendication 2, **caractérisé en ce qu'**à partir des cotes de distance (310, 320, 330), la fonction de transformation (70) détermine une distance plane (300) qui correspond à la distance entre la carte de circuit imprimé (50) et le support (60, 560, 660, 760, 860) au point de référence (51) de la carte de circuit imprimé (50) ou au point de référence (61) du support (60), la distance plane (300) étant de préférence déterminée de telle sorte qu'une distance minimale prédéfinie soit respectée pour toutes les mesures de distance (310, 320, 330) est réglée.

4. Procédé selon l'une des revendications 1 à 3, **caractérisé en ce que** la source lumineuse respective (110, 120, 130) est agencée pour émettre de la lumière à partir de la surface émettrice de lumière (111, 121, 131), de préférence dans la direction d'un vecteur de rayonnement (112, 122, 132), et à la coupler dans la surface de couplage de lumière (211, 221, 231) de l'optique primaire (210, 220, 230) respectivement associée, de préférence à partir de la direction d'un vecteur de couplage (213, 223, 233), et pour chaque paire composée d'une source lumineuse (110, 120, 130) et d'optique primaire associée (210, 220, 230), un paramètre d'orientation respectif est déterminé par le dispositif de calcul (9), lequel correspond à l'injection de la lumière émise respective et de la lumière injectée respective, et lequel est de préférence déterminé à partir de la différence d'angle spatiale entre le vecteur de rayonnement (112, 122, 132) et le vecteur de couplage (213, 223, 233).

5. Procédé selon la revendication 4, **caractérisé en ce qu'**un décalage de plan (301) entre le plan de référence lumineux (10) et le plan de référence optique (20) par rapport au point de référence de la carte de circuit imprimé (51) et au point de référence du support (61) et/ou une inclinaison de plan (16, 26) autour d'au moins un axe du plan de référence lumineux (10) et/ou du plan de référence optique (20) est obtenu, de sorte que les mesures d'orientation respectives sont minimisées, et de préférence les mesures d'orientation respectives d'au moins 75 % de toutes les paires de sources lumineuses (110, 120, 130) et d'optiques primaires associées (210, 220, 230) sont minimisées.

6. Procédé selon l'une des revendications 1 à 5, **caractérisé en ce que** les positions des surfaces émettrices de lumière (111, 121, 131) des sources lumineuses (110, 120, 130) sont situées approximativement dans le plan lumineux (15), et/ou les positions des surfaces de couplage de lumière (211, 221, 231) des optiques primaires (210, 220, 230) sont situées approximativement dans le plan optique (25), l'approximation des plans (15, 25) s'effectuant de préférence par la détermination d'un plan d'ajustement optimal pour chacun d'entre eux.
